(19) Europäisches Patentamt
European Patent Office
Office européen des brevets

(11) Veröffentlichungsnummer: **0 093 854**
**B1**

(12) **EUROPÄISCHE PATENTSCHRIFT**

(45) Veröffentlichungstag der Patentschrift: **13.08.86**

(51) Int. Cl.⁴: **C 08 L 27/06**, C 08 F 265/04

(21) Anmeldenummer: **83102407.0**

(22) Anmeldetag: **11.03.83**

(54) **Hochtransparente schlagzähe Formmassen auf der Basis von Polyvinylchlorid.**

(30) Priorität: **06.05.82 DE 3216989**

(43) Veröffentlichungstag der Anmeldung: **16.11.83 Patentblatt 83/46**

(45) Bekanntmachung des Hinweises auf die Patenterteilung: **13.08.86 Patentblatt 86/33**

(84) Benannte Vertragsstaaten: **BE DE FR GB IT NL SE**

(56) Entgegenhaltungen:
**BE-A-688 851**
**US-A-3 751 449**

(73) Patentinhaber: **HÜLS AKTIENGESELLSCHAFT, Patentabteilung / PB 15 - Postfach 13 20, D-4370 Marl 1 (DE)**

(72) Erfinder: **Stützel, Bernhard, Dr., Stargarder Strasse 32, D-4370 Marl (DE)**

**EP 0 093 854 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Modifizierte Polyvinylchlorid-Formmassen, die eine Schlagzähigkeit und eine gewisse Transparenz aufweisen, sind in der Literatur bereits beschrieben worden.

So wird gemäß DE-AS 20 03 331 beispielsweise ein Pfropfpolymeres aus Vinylchlorid und chloriertem Polyethylen hergestellt, welches überlegene Eigenschaften hinsichtlich Transparenz und Schlagfestigkeit besitzen soll (1. C. Spalte 1, Zeilen 1 bis 25). Wie die nachfolgenden Vergleichsversuche zeigen, sind die Eigenschaften dieses Pfropfpolymeren bezüglich Transparenz und Schlagfestigkeit jedoch durchaus verbesserungswürdig.

In der DE-AS 20 13 020 sind Pfropfmischpolymerisate beschrieben, zu deren Herstellung zunächst eine Monomerenmischung aus Styrol oder α-Methylstyrol in Gegenwart von vernetzend wirkenden Comonomeren auf ein Butyl- oder 2-Ethylhexylacrylat-Polymerisat pfropfpolymerisiert wird, woraufhin in Gegenwart des so entstandenen Pfropfpolymeren die Polymerisation des Vinylchlorids in Suspension erfolgt.

Wie die nachfolgend gebrachten Vergleichsversuche ausweisen, lassen sich so Polyvinylchlorid-Formmassen herstellen, welche in bezug auf Transparenz und Schlagzähigkeit noch nicht zufriedenstellend sind.

Andere Literaturstellen, wie beispielsweise DE-PS 26 21 522, beschreiben transparente schlagzähe Polyvinylchlorid-Formmassen, deren Herstellung durch Mischen von Polyvinylchlorid, einem Pfropfpolymeren und einem Copolymeren hergestellt wird, wobei das Pfropf- und das Copolymere aus jeweils mindestens 3 Komponenten bestehen und durch mehrstufige Polymerisation herzustellen sind. Angesichts dieser aufwendigen Herstellungsweise stellt sich die Aufgabe, hochschlagzähe und hochtransparente Polyvinylchlorid-Formmassen zur Verfügung zu stellen, zu deren Herstellung nur ein vergleichsweise geringer Aufwand notwendig ist.

Es wurden nun überraschenderweise hochtransparente schlagzähe Formmassen auf der Basis von Polyvinylchlorid oder zumindest 70 Gewichtsprozent aus Vinylchlorid-Einheiten bestehenden Mischpolymeren gefunden, welche als schlagzäh machende Komponente Polymerisate von Monomeren der folgenden Formel

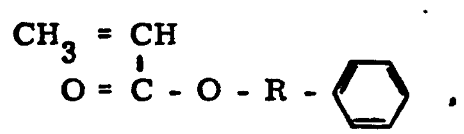

in der

R einen geradkettigen oder verzweigten Alkylenrest mit 3 bis 8 Kohlenstoffatomen bedeutet, welcher gegebenenfalls durch 1 bis 2 Ethersauerstoffatome unterbrochen ist, wobei der geradkettige Anteil wenigstens 3 Kohlenstoffatome enthält, enthalten.

Die schlagzäh machende Komponente hat ein mittleres Molgewicht $M_w$ von $10^4$ bis $5 . 10^8$, vorzugsweise von $5. 10^4$ bis $5 . 10^7$.

Die hochtransparenten schlagzähen Formmassen enthalten die schlagzäh machende Komponente in Mengen von 1 bis 30 Gewichtsprozent, vorzugsweise von 3 bis 15 Gewichtsprozent, bezogen auf die Mischung aus Polyvinylchlorid (bzw. Vinylchloridmischpolymerisat) und schlagzäh machende Komponenten.

Die schlagzäh machende Komponente enthält 0 bis 30 Gewichtsprozent aliphatische Acrylsäureester mit 4 bis 12 Kohlenstoffatomen im Alkoholrest. Die schlagzäh machende Komponente kann auch in Gegenwart vernetzend wirkender Verbindungen hergestellt sein oder vor ihrer Einarbeitung mit vernetzend wirkenden Verbindungen umgesetzt werden.

Die Polymerisation des Vinylchlorids kann in üblicher Weise vor sich gehen. Es können dabei beliebig die Verführen der Massepolymerisation, Emulsions- oder Suspensionspolymerisütion angewendet werden, wie sie beispielsweise in der Monographie von Kainer, Polyvinylchlorid und Vinylchlorid-Mischpolymerisate, Springer-Verlag, Berlin/ Heidelberg/New York, (1865), auf den Seiten 1 bis 58 beschrieben sind.

Die schlagfest machende Komponente ist ein Polymeres z. B. folgender Monomerer:

3-Phenyl-n-propyl-acrylat:

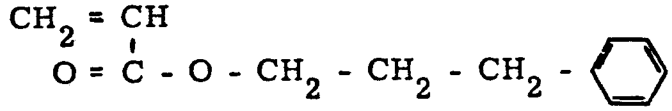

4-Phenyl-n-butyl-acrylat:

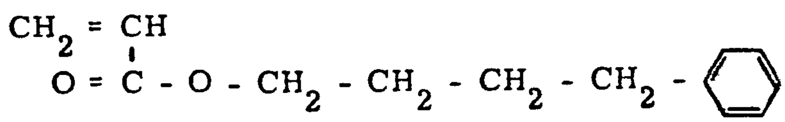

(3-Phenyl-3-methyl)-propyl-acrylat:

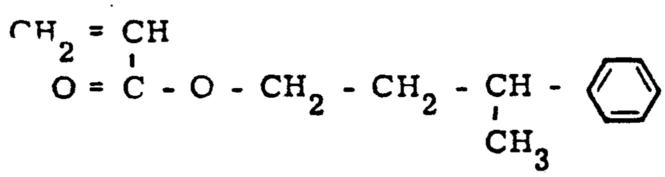

(3-Phenyl-2-methyl)-propyl-acrylat:

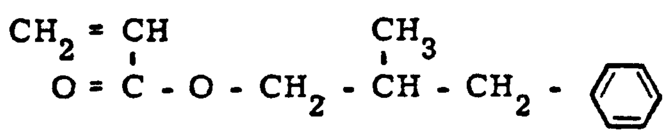

(3-Phenyl-1-methyl)-propyl-acrylat:

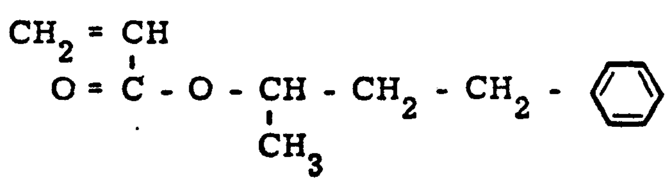

5-Phenyl-n-pentyl-acrylat:

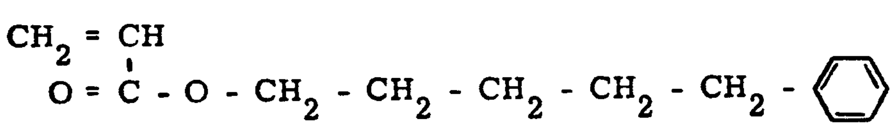

6-Phenyl-n-hexyl-acrylat:

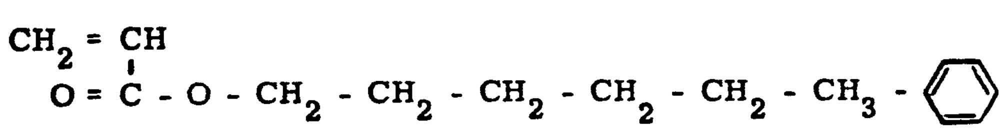

(6-Phenyl-2-ethyl)-hexylacrylat:

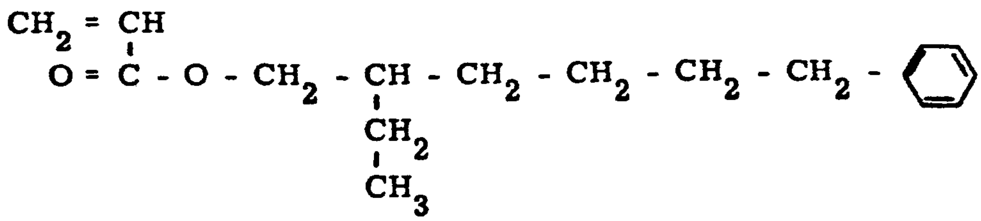

Benzyl-oxyisopropyl-acrylat:

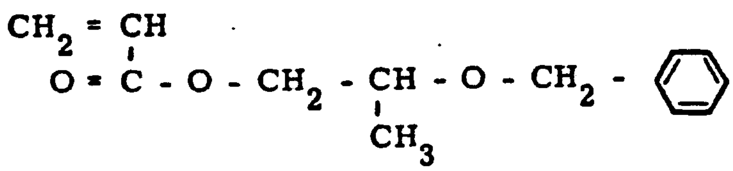

2-Phenylethyl-oxyethyl-acrylat:

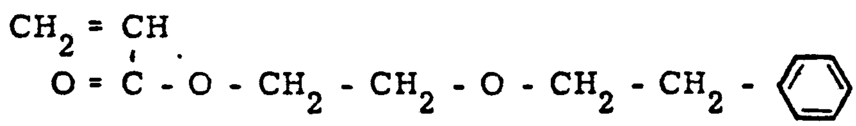

3-Phenylpropyl-oxymethyl-acrylat:

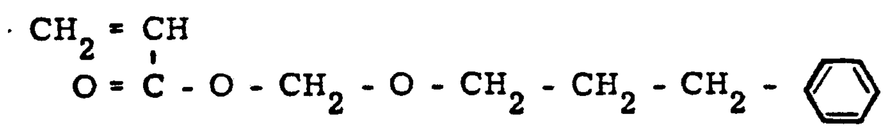

3-Phenylisopropyl-oxymethyl-acrylat:

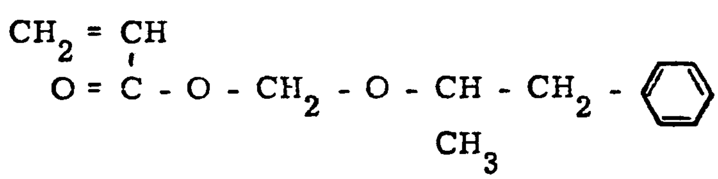

Benzyl-oxypropyl-acrylat:

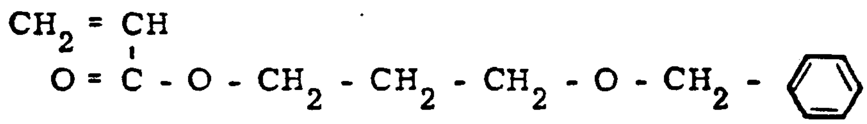

2-Phenylethyl-oxymethyl-acrylat:

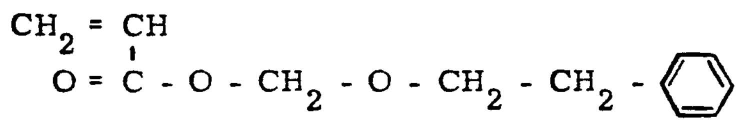

Zugrundeliegende Alkohole können z. B. nach folgenden bereits beschriebenen Methoden hergestellt werden:

1. Das 3-Phenylpropanol-1 kann aus Styrol durch Anlagerung von 2 Mol Formaldehyd und anschließender Hydrierung hergestellt werden (Organic Syntheses, Vol. IV, Seiten 786/787 und Seiten 798/ 799).
2. Das 4-Phenylbutanol-1 kann aus β-Phenethylmagnesiumbromid und Ethylenoxid hergestellt werden (J. Am. Chem. Soc. 46, 242).
3. Das 1-Methyl-3-phenyl-propanol-1 kann man aus Methyl-(phenylethyl)-keton durch Reduktion erhalten (Collect. Czech. Chem. Commun. 1976, 41 (8), 2264).
4. 3-Phenyl-3-methyl-propanol-1 kann nach vorangegangener Transmetallierung durch Umsetzung der α-Natriumverbindung des Ethylbenzols mit Ethylenoxid erhalten werden (Japan. Kokai 73 75 551, 14.01.1972).
5. Das 2-Methyl-3-phenylpropanol-1 kann durch Alanat-Reduktion des Natriumsalzes von Benzylmalonsäurediethylester erhalten werden (Chem. Ber. 1970, 103, 3771).
6. Ethylenglykolmonophenethylether erhält man aus 2-Phenylethanol und Ethylenoxid unter Säurekatalyse (Bull. soc. Chem. 8 (1941), 170 - 85).

Die schlagzäh machende Komponente ist ein Polymeres von Phenylalkyl-acrylsäureestern der Formel

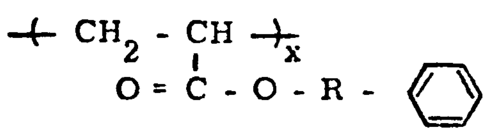 ,

in der

R einen geradkettigen oder verzweigten Alkylenrest mit 3 bis 4 Kohlenstoffatomen bedeutet, der gegebenenfalls durch ein Ethersauerstoffatom unterbrochen ist, wobei der geradkettige Anteil wenigstens 3 Kohlenstoffatome enthält, und x für eine Zahl von 20 bis $5 \cdot 10^5$ steht. Vorzugsweise steht x für eine Zahl von 50 bis 50 000.

Ein Teil der o. g. Polymeren aus phenylsubstituierten Acrylsäureestern, bei denen R = $-(-CH_2-)_y-$ mit y = 5 - 8 darstellt, und deren Herstellung ist bereits in der US-PS 3 751 449 beschrieben. Sie werden gemäß dieser Literaturstelle als druckempfindliche Adhesive verwendet, wobei ihre Bedeutung in Zusammenhang mit PVC-Massen jedoch nicht erkannt wurde.

Die Polymeren lassen sich durch übliche Polymerisation in Masse, in Lösung, in Emulsion oder in Suspension aus den o. a. Monomeren herstellen in analoger Weise, wie dies in der Monographie Monomeric Acrylic Esters von Riddle, Reinhold Publishing Corp. (1954) auf den Seiten 37 bis 56 oder auch in der Monographie Acrylic Resins von Horn, Reinhold Publishing Corp. (1960), Seiten 26 bis 29, beschrieben ist.

Besonders zweckmäßig ist die Herstellung der Polymeren durch Emulsionspolymerisation.

Als Emulgatoren lassen sich die bekannten Typen einsetzen. Es kommen insbesondere ionogene infrage, z. B. Salze, von Carbonsäure, wie Natriumcaprinat, Natriumlaurat, Natriummyristat, Natriumpalmitat. Weiterhin eignen sich Salze primärer und sekundärer Alkylsulfate, z. B. Natriumcaprylsulfat, Natriumlaurylsulfat, Natriummyristylsulfat und Natriumoleylsulfat. Ebenso kommen infrage Sulfate veresterter Polyoxyverbindungen, wie monofettsaurer Glycerinschwefelsäureester, Salze primärer und sekundärer Alkylsulfonate, wie Natriumethylsulfonat, Natriumstearylsulfonat, Natriumoleylsulfonat, n-Alkansulfonate mit statistischer Verteilung der Sulfonsäuregruppe und Kettenlänge $C_{13}$-$C_{17}$ usw. Es können auch Alkylarylsulfonate eingesetzt werden, z. B. das Na-Salz der p-n-Dodecylbenzolsulfonsäure.

Weiterhin kommen auch Gemische von Emulgatoren in Betracht. Zu den genannten Emulgatoren können auch zusätzlich Hilfsstoffe beigegeben werden, z. B. Alkohole, wie Laurylalkohol, Ester, wie Sorbitmonolaurat und Carbonsäureglykolester.

Die Konzentration der Emulgatoren beträgt 0, 1 bis 3 Gewichtsprozent, vorzugsweise 0,5 bis 2,0 Gewichtsprozent, bezogen auf Monomeres.

Als Katalysatoren kommen die bei der Emulsionspolymerisation üblicherweise angewandten wasserlöslichen Verbindungen infrage, wie wasserlösliches Persulfat, z. B. Na-, oder K-Persulfat gegebenenfalls kombiniert mit einer reduzierenden Komponente, wie wasserlösliches Bisulfit, Hydrosulfit, Hydrazin, Thiosulfat, Formaldehydsulfoxylate; Wasserstoffperoxid kombiniert mit reduzierenden Komponenten, wie Bisulfit, Hydpazin, Hydroxylamin oder Ascorbinsäure, ferner wasserlösliches Persulfat kombiniert mit Wasserstoffperoxid und einer aktivierenden Komponente, wie Kupfersalze, welche im alkalischen Medium mit Komplexbildnern, wie Pyrophosphaten, einzusetzen sind. Es werden die üblichen Konzentrationen angewendet.

Die Polymerisationstemperatur sollte 5 bis 120° C betragen, vorzugsweise jedoch 40 bis 90° C. Die Polymeren haben in der Regel eine breite Molekulargewichtsverteilung, wie dies anhand der Beispiele später erläutert wird. In den Molekulargewichtsmittelwerten, ermittelt durch Gelpermeationschromatografie (GPC), zeigen sich diese breiten Molekulargewichtsverteilungen, indem zahlenmittlere Molekulargewichte von $5 . 10^3$ bis $5 . 10^4$ und gewichtsmittlere Molekulargewichte von $5 . 10^5$ bis $5 . 10^8$ möglich sind. Als Endgruppen treten in bekannter Weise eingebaute Katalysatorreste auf. Die Polymeren sind ataktisch.

Bei der Lösungspolymerisation können z. B. folgende Lösungsmittel eingesetzt werden: aromatische Kohlenwasserstoffe, wie Toluol, Xylol o. Ä., Ether, wie Tetrahydrofuran, Diethylether o. Ä.

Als Katalysatoren kommen z. B. infrage: organische Peroxide, wie Benzoylperoxid, Succinylperoxid, Lauroylperoxid o. Ä., Percarbonate, wie Isopropylpercarbonat, Cyclohexylpercarbonat; Peroxydicarbonate, wie Dicetylperoxydicarbonat; Azoverbindungen, wie Azodiisobutyronitril etc.

Die Polymerisationstemperatur sollte zwischen 20 und 120 °C liegen.

Bei der Massepolymerisation können z. B. folgende Katalysatoren angewendet werden: organische Peroxide, wie Benzoylperoxid, Succinylpe roxid, Lauroylperoxid; Percarbonate, wie Isopropylpercarbonat, Cyclohexylpercarbonat; Peroxydicarbonate, wie Dicetylperoxydicarbonat; Azoverbindungen, wie Azodiisobutyronitril etc.

Die Polymerisationstemperatur sollte 20 bis 180° C betragen.

In der Suspensionspolymerisation können als Suspensionsstabilisatoren eingesetzt werden: handelsübliche Hydroxypropylcellulosen, Hydroxyethylcellulosen, teilverseifte Polyvinylacetate, Polyvinylpyrrolidon, Methylcellulosen, Gelatine oder Mischungen dieser Stabilisatoren.

Als Katalysatoren kommen z. B. infrage: organische Peroxide, wie Benzoylperoxid, Succinylperoxid, Lauroylperoxid; Percarbonate, wie Isopropylpercarbonat, Cyclohexylpercarbonat; Peroxydicarbonate, wie Dicetylperoxydicarbonat; Azoverbindungen, wie Azodiisobutyronitril etc.

Die Polymerisationstemperatur sollte 20 bis 120 °C betragen.

Die Herstellung der Mischpolymerisate mit bis zu 30 Gewichtsprozent an aliphatischen Acrylsäureestern mit 4 bis 12 Kohlenstoffatomen geht nach den oben beschriebenen Methoden vor sich. Als aliphatische Acrylsäureester mit 4 bis 12 Kohlenstoffatomen im Alkoholteil lassen sich einsetzen: n-Butyl-acrylat, Isobutylacrylat, n-Hexylacrylat, Isohexylacrylat, n-Octylacrylat, 2-Ethyl-hexylacrylat, n-Decylacrylat, Isodecylacrylat, n-Dodecylacrylat, Isododecylacrylat.

Das Einbringen der schlagzäh machenden Komponente in das Polyvinylchlorid kann durch alle bekannten Verfahren des Modifizierens durchgeführt werden, nämlich durch Pfropfpolymerisation von Vinylchlorid auf die schlagzäh machende Komponente oder durch beliebige Arten des Mischens von Polyvinylchlorid mit der schlagzäh machenden Komponente, z. B. durch Mischen im festen Zustand auf einem Walzenmischer, einem Banbury-Mischer, einem Plastographen, einem Compoundier-Extruder oder dergleichen. Gegebenenfalls können die Komponenten auch mittels eines Rippenmischers oder eines Henschel-Mischers vorgemisdit werden. Das Polyvinylchlorid und die schlagzäh machende Komponente können auch miteinander in Latexform gemischt werden. Man kann den Latex dann auf übliche Weise trocknen, z. B. durch Verdüsen.

Die schlagzäh machende Komponente mit dem mittleren Molgewicht von 10 000 bis $5 . 10^8$, vorzugsweise von 20 000 bis 500 000, kann als solche in das Polyvinylchlorid eingebracht werden; es ist aber auch möglich, sie in Gegenwart vernetzend wirkender Verbindungen zu polymerisieren oder vorher mit vernetzend wirkenden

Verbindungen umzusetzen. Als vernetzend wirkende Verbindungen kommen infrage: Divinylbenzol, Divinylester von zwei- und dreibasischen Säuren, wie Divinyladipat, Diallylester von mehrfunktionellen Säuren (Diallylphthalate), Divinylether von mehrwertigen Alkoholen (Divinylether von Ethylenglykol), di- und tri-Methacrylate und -acrylate mehrwertiger Alkohole. Besonders geeignet sind die handelsüblichen Vertreter der letztgenannten Gruppe, da sie sich mit Acrylsäureestern gut mischpolymerisieren lassen und dem fertigen Gemisch eine bessere thermische Stabilität verleihen. Beispielsweise seien erwähnt: Ethylenglykoldimethacrylat, Propylenglykoldimethacrylat, 1,3 -Butylenglykoldimethacrylat, 1,4-Butylenglykoldirnethacrylat sowie die entsprechenden Diacrylate. Die Vernetzungsreaktion der Polymeren kann in üblicher Weise bei Temperaturen von 70 bis 180 °C, vorzugsweise von 40 bis 90° C, mit 0,1 bis 5,0 Gewichtsprozent an Vernetzer, bezogen auf Polymeres, durchgeführt werden.

Dem mit der schlagzäh machenden Komponente vermischten Polyvinylchlorid können übliche Zusätze, wie Stabilisatoren, Weichmacher, Gleitmittel, Pigmente, Füllstoffe und dergleichen zugegeben werden. Diese Zusätze kann man zweckmäßigerweise auch gleich beim Vermischen des Polyvinylchlorids mit der schlagfest machenden Komponente mit einmischen.

Wie die nachfolgenden Beispiele ausweisen, zeigen die erfindungsgemäßen Mischungen eine besonders hohe Schlagzähigkeit bei hoher Transparenz.

Die Erfindung wird durch die nachfolgenden Beispiele weiter erläutert.

## A) Herstellung des phenylsubstituierten Acrylsäureesters

### Beispiel 1

In einem 4 l-Dreihalskolben mit Rührer, Rückflußkühler, Wasserauskreiser, Tropftrichter und Heizeinrichtung werden vorgelegt:

43 Teile (2 150 g) 3-Phenylpropanol-1
10 Teile (500 g) Toluol
0,4 Teile (20 g) Toluolsulfonsäure
0, 02 Teile (1 g) Hydrochinon

Im Tropftrichter befinden sich 17, 3 Teile (865 g) Acrylsäure.

-Aus dem Tropftrichter werden unter Rührung 0,5 Teile (25 g) Acrylsäure in das vorgelegte Reaktionsgernisch gegeben und der Kolbenßnhalt auf 150 bis 170° C aufgeheizt. Wenn sich am Wasserabscheider das erste Wasser absetzt, wird die restliche Acrylsäure innerhalb von ca. 3 Stunden zugetropft und portionsweise das jeweils ausgeschiedene Wasser abgezogen, bis mindestens 95 % der theoretisch zu erwartenden Wassermenge erreicht sind.

Zur Aufarbeitung wird das erkaltete Produkt mit $NaHCO_3$-Lösung und Wasser gewaschen, die wäßrige Phase im Scheidetrichter abgetrennt und die organische Phase destilliert. Nach Abdestillation von Toluol bei ca. 100 mbar werden Acrylsäureester und Alkohol über eine Kolonne getrennt.

Siedepunkt des 3-Phenylpropanol-1: 109° C/6 mbar
Siedepunkt des 3-Phenylpropanol-1-Acrylsäureesters: 120 °C/6 mbar

### Beispiel 2

In der unter Beispiel 1 beschriebenen Weise werden vorgelegt:
47 Teile (2 350 g) 4-Phenylbutanol-1
10 Teile (500 g) Toluol
0,4 Teile (20 g) Toluolsulfonsäure
0, 02 Teile (1 g) Hydrochinon
Im Tropftrichter befinden sich 17,3 Teile (865 g) Acrylsäure.
Reaktionsführung und Aufarbeitung geschehen in der unter Beispiel 1 beschriebenen Weise.
Siedepunkt des 4-Phenylbutanol-1: 116° C/6 mbar
Siedepunkt des 4-Phenylbutanol-1 -Acrylsäureesters: 126 °C/6 mbar

### Beispiel 3

In der unter Beispiel 1 beschriebenen Weise werden vorgelegt:
47 Teile (2 350 g) 3-Phenyl-3-methyl-propanol-1
10 Teile (500 g) Toluol
0,4 Teile (20 g) Toluolsulfonsäure
0,02 Teile (1 g) Hydrochinon

Im Tropftrichter befinden sich 17,3 Teile (865 g) Acrylsäure.
Reaktionsführung und Aufarbeitung geschehen in der unter Beispiel 1 beschriebenen Weise.
Siedepunkt des 3-Phenyl-3-methyl-propanol-1: 114 °C/6 mbar
Siedepunkt des 3-Phenyl-3-methyl-propanol-1 -Acrylsäureesters: 123 °C/6 mbar

**Beispiel 4**

In der unter Beispiel 1 beschriebenen Weise werden vorgelegt:
47 Teile (2 350 g) 3-Phenyl-2-methyl-propanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.
Reaktionsführung und Aufarbeitung geschehen in der unter Beispiel 1 beschriebenen Weise.
Siedepunkt des 3-Phenyl-2-methyl-propanols: 114 °C/6 mbar
Siedepunkt des 3 -Phenyl-2 -methyl-propanol-acrylsäureesters: 123 °C/6 mbar

**Beispiel 5**

In der unter Beispiel 1 beschriebenen Weise werden vorgelegt:
47 Teile (2 350 g) 3-Phenyl-1-methyl-propanol-1
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.
Reaktionsführung und Aufarbeitung geschehen in der unter Beispiel 1 beschriebenen Weise
Siedepunkt des 3-Phenyl-1 -methyl-propanol-1: 114 °C/6 mbar
Siedepunkt des 3 -Phenyl-1 -methyl-propanol-1-acrylsäureesters: 123 °C/g mbar

**Beispiel 6**

In der unter Beispiel 1 beschriebenen Weise werden vorgelegt:
50 Teile (2 500 g) Ethylenglykolmonophenethylether
10 Teile (500 g) Toluol
0,4 Teile (20 g) Toluolsulfonsäure
0,02 Teile (1 g) Hydrochinon
Im Tropftrichter befinden sich 17,3 Teile (865 g) Acrylsäure.
Reaktionsführung und Aufarbeitung geschehen in der unter Beispiel 1 beschriebenen Weise.
Siedepunkt des Ethylenglykolmonophenethylethers: 122 °C/6 mbar
Siedepunkt des Ethylenglykolmonophenethylether-acrylsäureesters: 132 °C/6 mbar

**B) Herstellung des Poly-Acrylsäureesters**

**Beispiel 7**

In einem 2 l-Stahlautoklaven mit Rührer, Temperierung sowie üblichen Einrichtungen zum Evakuieren, Begasen mit $N_2$, Einfüllen und Zudosieren von Reaktanten (Hersteller z. B. Fa. SFS/Buechi, Uster, Schweiz) werden vorgelegt:
20 Teile (250 g) 3-Phenylpropanol-1 -acrylsäureester
76 Teile (950 g) VE-Wasser
0,24 Teile (3 g) Na-Laurat
In die Vorlage der Dosiereinrichtung werden gegeben:
0,012 Teile (0, 15 g) Ammoniumperoxodisulfat
4 Teile (50 g) VE-Wasser
Nach Entgasen und Spülen mit $N_2$ wird der Reaktorinhalt unter 2 bar $N_2$-Überdruck auf 80°C aufgeheizt. Während des Aufheizens werden 5 ml der Ammoniumperoxodisulfat-Lösung zugegeben, der Rest wird gleichmäßig im Verlauf von 120 Minuten zudosiert und die Reaktionstemperatur auf 80°C gehalten. Nach

weiteren 30 Minuten ist die Reaktion beendet. Man läßt abkühlen und erhält einen weißen stabilen Polyacrylat-Latex.

Diese Polyacrylate haben eine sehr breite Molekulargewichtsverteilung. Zur eingehenden Charakterisierung dieser Verteilung wird die Gelpermeationschromatographie (GPC) herangezogen, wozu jeweils eine Lösung des Polymeren in Tetrahydrofuran diente. Auf diese Weise können die Molekulargewichtsverteilung und die in der Polymercharakterisierung üblichen Molekulargewichtsmittelwerte - das Zahlenmittel $M_n = \Sigma niMi/\Sigma ni$ und das Gewichtsmittel $M_w = \Sigma niMi^2/ \Sigma niMi$ - angegeben werden:

$M_n$ . 8,1 . $10^3$ $M_w$ = 13,4 . $10^7$

Die Molekulargewichtsverteilungskurve ist in Figur 1 wiedergegeben.

**Beispiel 7 a**

In der in Beispiel 7 verwendeten Apparatur wird in der dort beschriebenen Weise auch in Gegenwart von vernetzend wirkenden Substanzen polymerisiert. Hierzu werden vorgelegt:

20 Teile (250 g) 3-Phenylpropanol-1-acrylsäureester
76 Teile (850 g) VE-Wasser
0,2 Teile (2,5 g) Diallylphthalat
0,24 Teile (3,0 g) Na-Laurat

In die Vorlage der Dosiereinrichtung werden gegeben:

0,012 Teile (0,15 g) Ammoniumperoxodisulfat
4 Teile (50 g) VE-Wasser

Man erhält einen weißen stabilen Polyacrylat-Latex. Die Molekulargewichtscharakterisierung durch GPC (vgl. Anmerkung bei Beispiel 7) ergibt

$M_n$ = 2,4 . $10^4$ $M_w$ = 21 . $10^7$

Die Molekulargewichtsverteilung ist in Figur 2 wiedergegeben.

**Beispiele 8 bis 12**

In der in Beispiel 7 verwendeten Apparatur werden in der dort beschriebenen Weise die nach den Beispielen 2 bis 8 hergestellten Acrylsäureester polymerisiert. Hierzu verwendet man jeweils:

20 Teile (250 g) phenylsubstituierte Acrylsäureester
76 Teile (950 g) VE-Wasser
0,24 Teile (3 g) Na-Laurat

In die Vorlage der Dosiereinrichtung werden gegeben:

0,012 Teile (0,15 g) Ammoniumperoxodisulfat
4 Teile (50 g) VE-Wasser

Man erhält jeweils einen weißen, stabilen Polyacrylat-Latex.

Die Molekulargewichtscharakterisierung durch GPC (vgl. Anmerkung bei Beispiel 7) ergibt

bei Beispiel 8 $M_n$ = 9,3 . $10^3$, $M_w$ = 14,4 . $10^7$ Molekulargewichtsverteilungskurve siehe Figur 3;
bei Beispiel 9 $M_n$ = 8,5 . $10^3$, $M_w$ = 13,5 . $10^7$ Molekulargewichtsverteilungskurve siehe Figur 4;
bei Beispiel 10 $M_n$ = 8,4 . $10^3$, $M_w$ = 12,3 . $10^7$ Molekulargewichtsverteilungskurve siehe Figur 5;
bei Beispiel 11 $M_n$ = 8,2 . $10^3$, $M_w$ = 11,5 . $10^7$ Molekulargewichtsverteilungskurve siehe Figur 6;
bei Beispiel 12 $M_n$ = 7,6 . $10^3$, $M_w$ 12,1 . $10^7$ Molekulargewichtsverteilungskurve siehe Figur 7.

**Beispiele 8 a bis 12 a**

Die in den Beispielen 8 bis 12 beschriebenen Polymerisationen der nach Beispiel 2 bis 6 hergestellten Acrylsäureester werden auch in Gegenwart von vernetzend wirkenden Substanzen durchgeführt. Hierzu verwendet man jeweils:

20 Teile (250 g) phenylsubstituierte Acrylsäureester
76 Teile (950 g) VE-Wasser
0,2 Teile (2,5 g) Diallylphthalat
0,24 Teile (3,0 g) Na-Laurat

In die Vorlage der Dosiereinrichtung werden gegeben:

0,012 Teile (0,15 g) Ammoniumperoxodisulfat
4 Teile (50 g) VE-Wasser

Man erhält jeweils einen weißen, stabilen Polyacrylat-Latex.

Die Molekulargewichtscharakterisierung durch GPC (vgl. Anmerkung bei Beispiel 7) ergibt

bei Beispiel 8 a $M_n$ = 3,14 . $10^4$, $M_w$ = 33,8 . $10^7$ Molekulargewichtsverteilungskurve siehe Figur 8;

bei Beispiel 9 a $M_n$ = 2,45 . $10^4$, $M_w$ = 21,1 . $10^7$ Molekulargewichtsverteilungskurve siehe Figur 9;
bei Beispiel 10 a $M_n$ = 3,05 . $10^4$, $M_w$ = 33,2 . $10^7$ Molekulargewichtsverteilungskurve siehe Figur 10;
bei Beispiel 11 a $M_n$ = 2,8 . $10^4$, $M_w$ = 28,3 . $10^7$ Molekulargewichtsverteilungskurve siehe Figur 11;
bei Beispiel 12 a $M_n$ = 2,3 . $10^4$, $M_w$ = 20,3 . $10^7$ Molekulargewichtsverteilungskurve siehe Figur 12.

**Beispiele 13 bis 18**

Mittels der in Beispiel 7 beschriebenen Apparatur können auch Copolymere der phenylsubstituierten Acrylsäureester mit Alkylacrylaten hergestellt werden. Hierzu werden z. B. eingesetzt:
18 Teile (225 g) phenylsubstituierte Acrylsäureester, hergestellt nach den Beispielen 1 bis 8
2 Teile (50 g) Butylacrylat
76 Teile (950 g) VE-Wasser
0,24 Teile (3 g) Na-Laurat
In die Vorlage der Dosiereinrichtung werden gegeben:
0, 012 Teile (0,15 g) Ammoniumperoxodisulfat
4 Teile (50 g) VE-Wasser
Man erhält jeweils einen weißen, stabilen Polyacrylat-Latex.
Die Molekulargewichtscharakterisierung durch GPC (vgl. Anmerkung bei Beispiel 7) ergibt
bei Beispiel 13 $M_n$ = 9,6 . $10^3$, $M_w$ = 14,8 . $10^7$ Molekulargewichtsverteilungkurve siehe Figur 13;
bei Beispiel 14 $M_n$ = 8,2 . $10^3$, $M_w$ = 13,3 . $10^7$ Molekulargewichtsverteilungskurve siehe Figur 14;
bei Beispiel 15 $M_n$ = 7,9 . $10^3$, $M_w$ = 12,6. $10^7$ Molekulargewichtsverteilungskurve siehe Figur 15;
bei Beispiel 18 $M_n$ = 7,4 . $10^3$, $M_w$ 11,3 . $10^7$ Molekulargewichtsverteilungskurve siehe Figur 16;
bei Beispiel 17 $M_n$ = 8,9 . $10^3$, $M_w$ = 15,1 . $10^7$ Molekulargewichtsverteilungskurve siehe Figur 17;
bei Beispiel 18 $M_n$ = 8,0 . $10^3$, $M_w$ = 13,8 . $10^7$ Molekulargewichtsverteilungskurve siehe Figur 18.

**Beispiele 13 a bis 18 a**

Die in den Beispielen 13 bis 18 beschriebenen Polymerisationen werden auch in Gegenwart von vernetzend wirkenden Substanzen durchgeführt. Hierzu werden z. B. eingesetzt:
18 Teile (225 g) phenylsubstituierte Acrylsäureester, hergestellt nach den Beispielen 1 bis 6
2 Teile (50 g) Butylacrylat
76 Teile (950 g) VE-Wasser
0,2 Teile (2,5 g) Diallylphthalat
0,24 Teile (3, 0 g) Na-Laurat
In die Vorlage der Dosiereinrichtung werden gegeben:
0,012 Teile (0,15 g) Ammoniumperoxodisulfat
4 Teile (50 g) VE-Wasser
Man erhält jeweils einen weißen, stabilen Polyacrylat-Latex.
Die Molekulargewichtscharakterisierung durch GPC (vgl. Anmerkung bei Beispiel 7) ergibt
bei Beispiel 13 a $M_n$ = 3,1 . $10^4$, $M_w$ = 29,7 . $10^7$ Molekulargewichtsverteilungskurve siehe Figur 19;
bei Beispiel 14 a $M_n$ = 2,6 . $10^4$, $M_{w.}$ = 25,6 . $10^7$ Molekulargewichtsverteilungskurve siehe Figur 20;
bei Beispiel 15 a $M_n$ = 2,96 . $10^4$, $M_{w.}$ = 24,9 . $10^7$ Molekulargewichtsverteilungskurve siehe Figur 21;
bei Beispiel 16 a $M_n$ = 2,76 . $10^4$, $M_{w.}$ = 30,8 . $10^7$ Molekulargewichtsverteilungskurve siehe Figur 22;
bei Beispiel 17 a $M_n$ = 2,1 . $10^4$, $M_w$ = 29,4 . $10^7$ Molekulargewichtsverteilungskurve siehe Figur 23;
bei Beispiel 18 a $M_n$ = 2,8 . $10^4$, $M_w$ = 30,1 . $10^7$ Molekulargewichtsverteilungskurve siehe Figur 24.

**C) Herstellung der Mischung aus Polyvinylchlorid und Polyacrylsäureester**

**a) Pfropfpolymerisation von Vinylchlorid mit Polyacrylsäureester**

**Beispiele 19 bis 32**

In einem 2 l-Stahlautoklaven der unter B) beschriebenen Bauart werden vorgelegt:
50 Teile (200 g) Polyacrylat-Latex, hergestellt nach den Beispielen 7, 7 a, 8, 8a, 12, 12 a, 13, 13 a, 14, 14a, 15, 15a, 18, 18 a (dies entspricht jeweils 40 g festem Polymeren und 180 g Wasser)
160 Teile (840 g) VE-Wasser
0,03 Teile (0,12 g) Sorbitmonolaurat
0,08 Teile (0,32 g) Lauroylperoxid
0,06 Teile (0,24 g) Dicetylperoxydicarbonat

Nachdem das vorgelegte Gemisch entgast und mit Stickstoff gespült ist, werden unter Rühren bei 200 bis 300 U/m
90 Teile (360 g) Vinylchlorid
in den Autoklaven eingedrückt und anschließend die Rührdrehzahl auf 350 U/m erhöht. Dann werden
0,4 Teile (1,8 g) Hydroxyethylcellulose gelöst in
50 Teile (200 g) VE-Wasser
zugegeben und 2 bar $N_2$-Druck aufgegeben.
Der Reaktiorinhalt wird auf 60°C aufgeheizt und bei dieser Temperatur bis zum Druckabfall um 3 bar innerhalb von ca. 6 Stunden auspolymerisiert.

Nach Erkalten, Rest-VC-Entgasung, Abfiltrieren, Waschen und Trocknen erhält man ein rieselfähiges Pulver, dessen mittlerer Korndurchmesser bei 100 bis 150 µm liegt. Ermittelte Werte für Schlagzähigkeit und Transparenz sind Tabelle 1 zu entnehmen.

**Beispiel 33**

In einem 2 1-Stahlautoklaven der unter B) beschriebenen Bauart werden vorgelegt:
50 Teile (200 g) Poly-5-phenylpentylacrylat-Latex, hergestellt aus 5-Phenylpentylacrylat, mit 20% Polymeranteil (entsprechend 40 g festem Polymeren und 160 g Wasser)
160 Teile (640 g) VE-Wasser
0,03 Teile (0,12 g) Sorbitmonolaurat
0,08 Teile (0,32 g) Lauroylperoxid
0,06 Teile (0,24 g) Dicetylperoxydicarbonat
Nachdem das vorgelegte Gemisch entgast und mit Stickstoff gespült ist, werden unter Rühren bei 200 bis 300 U/m
90 Teile (360 g) Vinylchlorid
in den Autoklaven eingedrückt und anschließend die Rührdrehzahl auf 350 U/m erhöht. Dann werden
0,4 Teile (1,0 g) Hydroxyethylcellulose gelöst in
50 Teile (200 g) VE-Wasser
zugegeben und 2 bar $N_2$-Druck aufgegeben.
Der Reaktorinhalt wird auf 60 °C aufgeheizt und bei dieser Temperatur bis zum Druckabfall um 3 bar innerhalb von ca. 8 Stunden auspolymerisiert.
Nach Erkalten, Rest-VC-Entgasung, Abfiltrieren, Waschen und Trocknen erhält man ein rieselfähiges Pulver, dessen mittlerer Korndurchmesser bei 100 bis 150 µm liegt.
Ermittelte Werte für Schlagzähigkeit und Transparenz sind Tabelle 1 zu entnehmen.

**b) Mischen von Polyacrylsäureester (PA) und Masse-Polyvinylchlorid (M-PVC)**

**Beispiele 34 bis 48**

100 Teile M-PVC (hergestellt z. B. nach DE-OS 15 20 595) werden im Labormischer mit
55 Teile Polyacrylat-Latex mit 20 Gewichtsprozent Polymeranteil (hergestellt nach den Beispielen 7, 7a, 8, 8a, 12, 12a, 13, 13a, 14, 14a, 15, 15a, 18, 18a sowie dem in Beispiel 33 verwendeten Latex)
vermischt und bei 50 °C 12 Stunden im Vakuum getrocknet.
Man erhält ein nicht mehr rieselfähiges, z. B. auf der Walze verarbeitbares Pulver.
Ermittelte Werte für Schlagzähigkeit und Transparenz sind Tabelle 1 zu entnehmen.

**c) Mischen von Polyacrylsäureester (PA) und Suspensions-Polyvinylchlorid (S-PVC)**

**Beispiele 49 bis 63**

100 Teile S-PVC (hergestellt z. B. nach DE-OS 15 95 431) werden im Labormischer mit
55 Teile PA-Latex (hergestellt nach den Beispielen 7, 7a, 8, 8a, 12, 12a, 13, 13a, 14, 14a, 15, 15a, 18, 18a sowie dem in Beispiel 33 verwendeten Latex)
vermischt und bei 50°C im Vakuum getrocknet.
Man erhält ein nicht mehr rieselfähiges, z. B. auf der Walze verarbeitbares Pulver.
Ermittelte Werte für Schlagzähigkeit und Transparenz sind Tabelle 1 zu entnehmen.

**d) Mischen von PA und Emulsions-Polyvinylchlorid (E-PVC)**

**Beispiele 64 bis 68**

100 Teile (5 000 g) E-PVC-Latex mit 45% PVC (Herstellung z. B. nach DE-OS 25 31 780) und 22, 5 Teile (1 125 g) PA-Latex (mit 20 Gewichtsprozent Polymeranteil, Herstellung nach den Beispielen 7a, 8a, 12a, 13a, 14a)

werden zusammen in einer Nubilosa-Laborsprühtrocknungsanlage sprühgetrocknet. Man erhält ein begrenzt rieselfähiges Pulver.

Ermittelte Werte für Schlagzähigkeit und Transparenz sind Tabelle 1 zu entnehmen.

**e) Heißmischen von Polymerisaten der erfindungsgemäßen phenylsubstituierten Acrylsäureester mit PVC**

**Beispiele 69 bis 73**

Zunächst werden die Polyacrylat-Latices, hergestellt nach den Beispielen 7a, 8a, 12a, 13a, 14a, so aufgearbeitet, daß das reine Polymerisat vorliegt. Hierzu werden jeweils von o. a. Polyacrylat-Latex 250 g unter Rühren mit 100 g Methanol und 100 g 5 %iger wäßriger Na-Formiat-Lösung versetzt. Das so ausgefällte Polyacrylat wird auf einer Fritte abfiltriert, mit Methanol und VE-Wasser gewaschen und bei 40° C 24 Stunden im Vakuum getrocknet. 10 Teile (40 g) von derart erhaltenem Polymerisat werden jeweils mit 90 Teilen (360 g) M-PVC (hergestellt z. B. nach DE-OS 15 95 431) unter Verwendung der für alle Verarbeitungen, später beschriebenen Verarbeitungsund Stabilisierungshilsfmittel auf der Walze bei 185° C 5 bis 15 Minuten vermischt. Man erhält ein Walzfell, das in üblicher Weise weiter zu Preßplatten verarbeitet wird.

Ermittelte Werte für Schlagzähigkeit und Transparenz sind Tabelle 1 zu entnehmen.

**Tabelle 1**

| (X) Modifiziertes Polyvinylchlorid | (Y) Transmission, Schichtdicke 2 mm, Wellenlänge 600 nm | (Z) Kerbschlagzähigkeit in kJ/m², 4 mm-Preßplatten nach DIN 53 453 |
|---|---|---|
| Masse-Polyvinylchlorid nach DE-OS 15 20 595 (Standardprobe) | 81 | 2 |
| DE-AS 20 13 020 | 57 | 22 |
| Erfindungsgemäß Beispiel 19 | 87 | 38 |
| Beispiel 20 | 88 | 43 |
| Beispiel 21 | 84 | 39 |
| Beispiel 22 | 86 | 45 |
| Beispiel 23 | 80 | 39 |
| Beispiel 24 | 80 | 40 |
| Beispiel 25 | 85 | 41 |
| Beispiel 26 | 85 | 46 |
| Beispiel 27 | 84 | 39 |
| Beispiel 28 | 84 | 43 |
| Beispiel 29 | 82 | 22 |
| Beispiel 30 | 82 | 23 |
| Beispiel 31 | 81 | 44 |
| Beispiel 32 | 82 | 44 |
| Beispiel 33 | 81 | 48 |
| Beispiel 34 | 85 | 33 |
| Beispiel 35 | 85 | 40 |
| Beispiel 36 | 82 | 34 |
| Beispiel 37 | 84 | 42 |
| Beispiel 38 | 79 | 36 |

**Tabelle 1** - Fortsetzung

| (X) | (Y) | (Z) |
|---|---|---|
| Beispiel 39 | 78 | 40 |
| Beispiel 40 | 82 | 40 |
| Beispiel 41 | 82 | 40 |
| Beispiel 42 | 82 | 37 |
| Beispiel 43 | 81 | 41 |
| Beispiel 44 | 78 | 21 |
| Beispiel 45 | 79 | 20 |
| Beispiel 46 | 81 | 41 |
| Beispiel 47 | 79 | 43 |
| Beispiel 48 | 78 | 45 |
| Beispiel 49 | 84 | 36 |
| Beispiel 50 | 84 | 36 |
| Beispiel 51 | 81 | 40 |
| Beispiel 52 | 80 | 41 |
| Beispiel 53 | 77 | 36 |
| Beispiel 54 | 78 | 37 |
| Beispiel 55 | 81 | 42 |
| Beispiel 56 | 80 | 44 |
| Beispiel 57 | 79 | 40 |
| Beispiel 58 | 80 | 41 |
| Beispiel 59 | 76 | 22 |
| Beispiel 60 | 78 | 21 |
| Beispiel 61 | 77 | 42 |
| Beispiel 62 | 78 | 42 |
| Beispiel 63 | 78 | 44 |
| Beispiel 64 | 80 | 38 |
| Beispiel 65 | 80 | 35 |
| Beispiel 66 | 79 | 36 |
| Beispiel 67 | 78 | 33 |
| Beispiel 68 | 77 | 40 |
| Beispiel 69 | 80 | 35 |
| Beispiel 70 | 81 | 34 |
| Beispiel 71 | 78 | 37 |
| Beispiel 72 | 79 | 40 |
| Beispiel 73 | 78 | 39 |

Für die Ausprüfungen wurde folgende Konfektionierungs-Rezeptur angewendet:

Für die Ausprüfungen wurde folgende Konfektionierungs-Rezeptur angewendet:

Polyvinylchlorid 100 Gewichtsteile
(bzw. modifiziertes
Polyvinylchlorid)
Ba-Cd-Stabilisator 2,5 Gewichtsteile
Polyethylen-Gleitmittel 0,15 Gewichtsteile
Polymethylmethacrylat- 1,2 Gewichtsteile
Verarbeitungshilfsmittel
Flüssiger partieller Fett- 0,4 Gewichtsteile
säureester des Glycerins
Festes neutrales Glycerin- 0,4 Gewichtsteile
Esterwachs

Zur Herstellung der Prüfkörper wurden zunächst Walzfelle bei 185 °C Walzentemperatur und 5 Minuten Walzdauer hergestellt. Nach Verpressen zu 2 bzw. 4 mm dicken Platten wurden die in Tabelle 1 angegebenen Transmissions- bzw. Kerbschlagzähigkeitsmessungen vorgenommen.

Bei der Wertung der Transparenz ist zu bedenken, daß Polyvinylchlorid aufgrund seiner Neigung zur Zersetzung beim Verarbeitungsprozeß, verglichen mit anderen Thermoplasten, in besonderer Weise stabilisiert werden muß. Hierdurch wird die Transparenz, verglichen mit anderen Thermoplasten, verschlechtert. Masse-Polyvinylchlorid als reinstes Polyvinylchlorid sollte die bei diesem Thermoplasten größtmögliche Transparenz zeigen. Wenn daher ein schlagfestes, d. h. modifiziertes Polyvinylchlorid Transparenzen aufweist, die nahe an die Transparenz des reinen Masse- Polyvinylchlorids heranreichen, so müßten diese Transparenzen annähernd das auf diesem Gebiete höchstmögliche darstellen. Zeigt sich aber, wie durch einige unserer Beispiele belegt wurde, daß das modifizierte Polyvinylchlorid noch deutlich bessere Transparenzen aufweist als Masse-Polyvinylchlorid, so handelt es sich um einen echten überraschenden Effekt.

Dabei muß weiterhin in Betracht gezogen werden, daß die Transparenz, auch bei Masse-Polyvinylchlorid, von der jeweiligen Rezeptur, d. h. den (für die Verarbeitung unerläßlichen) Zusätzen an Gleitmittel, Stabilisatoren und dergleichen abhängig ist und nur für absolut gleiche Rezepturen und natürlich gleiche Schichtdicke Vergleiche gezogen werden dürfen.

Des weiteren ist noch auf die besonders hohe Schlagzähigkeit des erfindungsgemäß modifizierten Polyvinylchlorids hinzuweisen.

**Patentansprüche**

1. Hochtransparente schlagzähe Formmassen auf der Basis von Polyvinylchlorid oder zumindest 70 Gewichtsprozent aus Vinylchlorid-Einheiten bestehenden Mischpolymeren, enthaltend 1 bis 30 Gew % einer schlagzäh machenden Komponente, welche zu wenigstens 70 Gew % von Monomeren der folgenden Formel

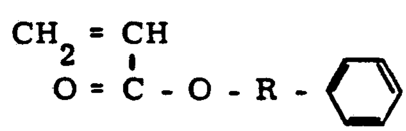

abgeleitet ist, in der

R einen geradkettigen oder verzweigten Alkylenrest mit 3 bis 8 Kohlenstoffatomen bedeutet, welcher gegebenenfalls durch 1 bis 2 Ethersauerstoffatome unterbrochen ist, wobei der geradkettige Anteil wenigstens 3 Kohlenstoffatome enthält und die Schlagzäh machende Komponente ein mittleres Molgewicht $M_w$ von $10^4$ bis $5 \cdot 10^8$ besitzt.

2. Hochtransparente schlagzähe Formmassen nach Anspruch 1,
dadurch gekennzeichnet,
daß die schlagzäh machende Komponente 0 bis 30 Gewichtsprozent aliphatische Acrylsäureester mit 4 bis 12 Kohlenstoffatomen im Alkoholrest enthält.

3. Hochtransparente schlagzähe Formmassen nach den Ansprüchen 1 oder 2,
dadurch gekennzeichnet,
daß die schlagzäh machende Komponente in Gegenwart von vernetzend wirkenden Verbindungen hergestellt wurde oder vor deren Einarbeitung mit vernetzend wirkenden Verbindungen umgesetzt wurde.

**Claims**

1. A highly transparent high-impact-strength moulding material based on polyvinyl chloride or on a copolymer consisting of at least 70% by weight of vinyl chloride units, which moulding material contains 1 to 30% by weight of a component which imparts impact strength and is derived, to the extent of not less than 70% by weight, from one or more monomers of the formula

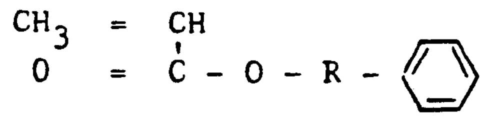

in which R denotes a straight-chain or branched alkylene radical of 3 to 8 carbon atoms and optionally interrupted by 1 or 2 ether oxygen atoms, the radical R including a straight-chain moiety linking O to the phenyl radical and containing at least 3 carbon atoms and the component which imparts impact strength having a mean molecular weight $M_w$ of $10^4$ to $5x10^8$.

2. A highly transparent high-impact-strength moulding material according to claim 1, characterised in that the component which imparts impact strength contains 0 to 30% by weight of one or more aliphatic esters of acrylic acid with 4 to 12 carbon atoms in the alcohol radical.

3. A highly transparent high-impact-strength moulding material according to claim 1 or 2, characterised in that the component which imparts impact strength has been produced in the presence of a compound which possesses a crosslinking action or has, before incorporation into the moulding material, been reacted with a compound which possesses a crosslinking action.

**Revendications**

1. Matières à mouler résilientes, très transparentes, basées de polychlorure de vinyle ou d'au moins 70 % en poids de copolymères formés d'unités chlorure de vinyle, contenant de 1 à 30 % en poids d'un constituant communiquant de la résilience qui est dérivé à raison d'au moins 70 % en poids de monomères de la formule suivante:

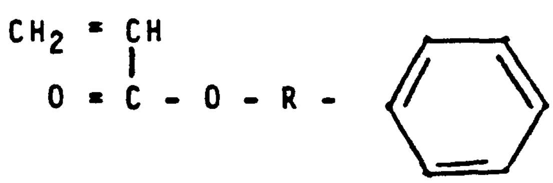

dans laquelle R représente un radical alkylène à chaîne droite ou ramifié contenant de 3 à 8 atomes de carbone, qui est éventuellement interrompu par 1 à 2 atomes d'oxygène d'éther, la fraction à chaîne droite contenant au moins 3 atomes de carbone et le constituant communiquant de la résiliance présentant un poids moléculaire moyen $M_w$ de $10^4$ à $5 . 10^8$

2. Matières à mouler résilientes très transparentes selon la revendication 1, caractérisées par le fait que le constituant communiquant de la résilience contient de zéro à 30 % en poids d'ester aliphatique d'acide acrylique renfermant 4 à 12 atomes de carbone dans le radical alcoolique.

3. Matières à mouler résilientes très transparentes selon l'une des revendications 1 et 2, caractérisées par le fait que le constituant communiquant de la résilience a été préparé en présence de composés ayant une action de réticulation ou qu'on l'a fait réagir, avant son incorporation, sur des composés ayant une action de réticulation.

FIG. 1

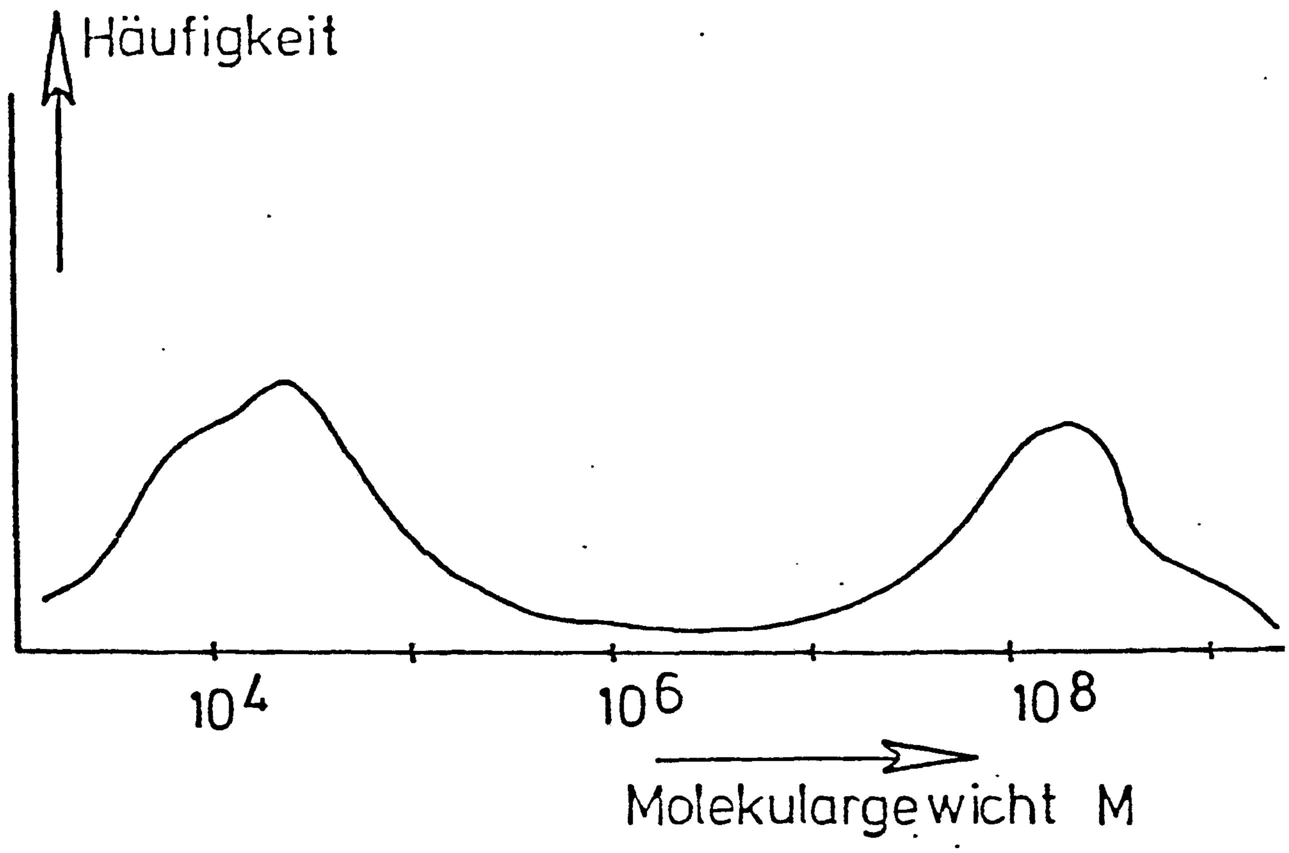
Häufigkeit
10^4
10^6
10^8
Molekulargewicht M

FIG. 2

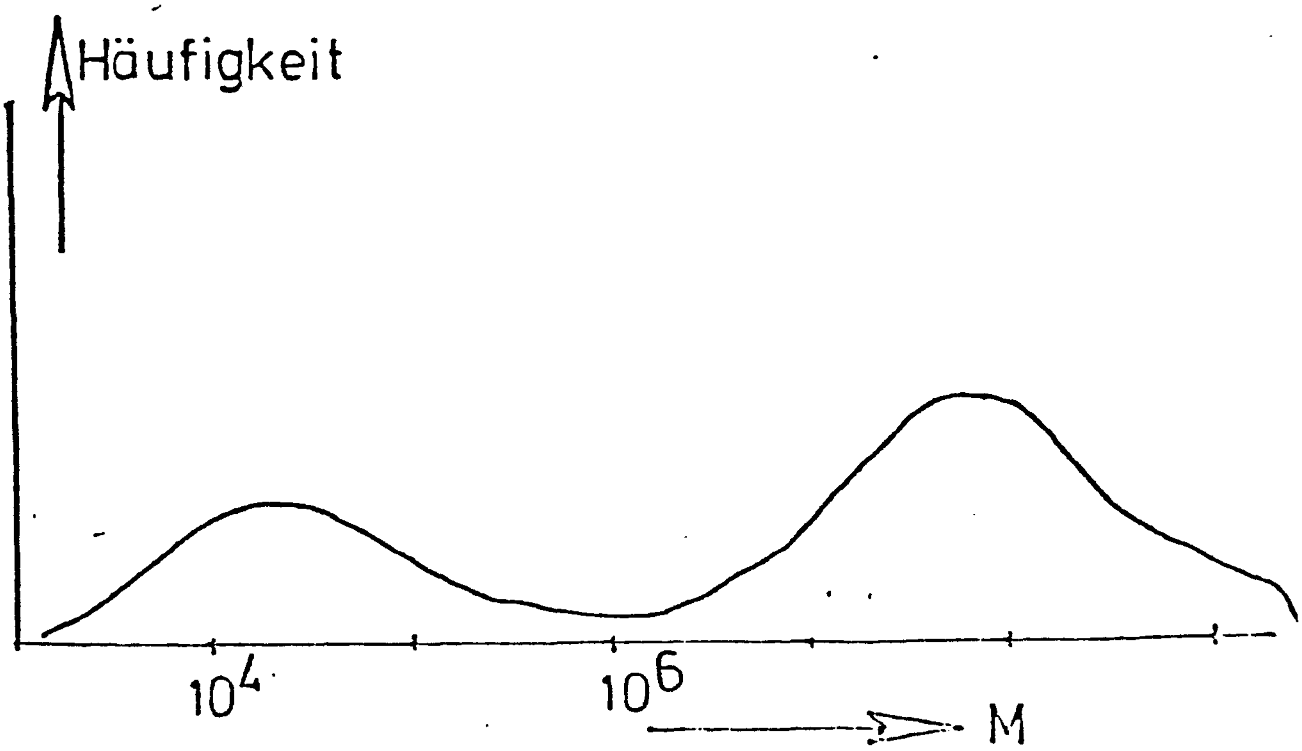
Häufigkeit
10^4
10^6
M

FIG. 3

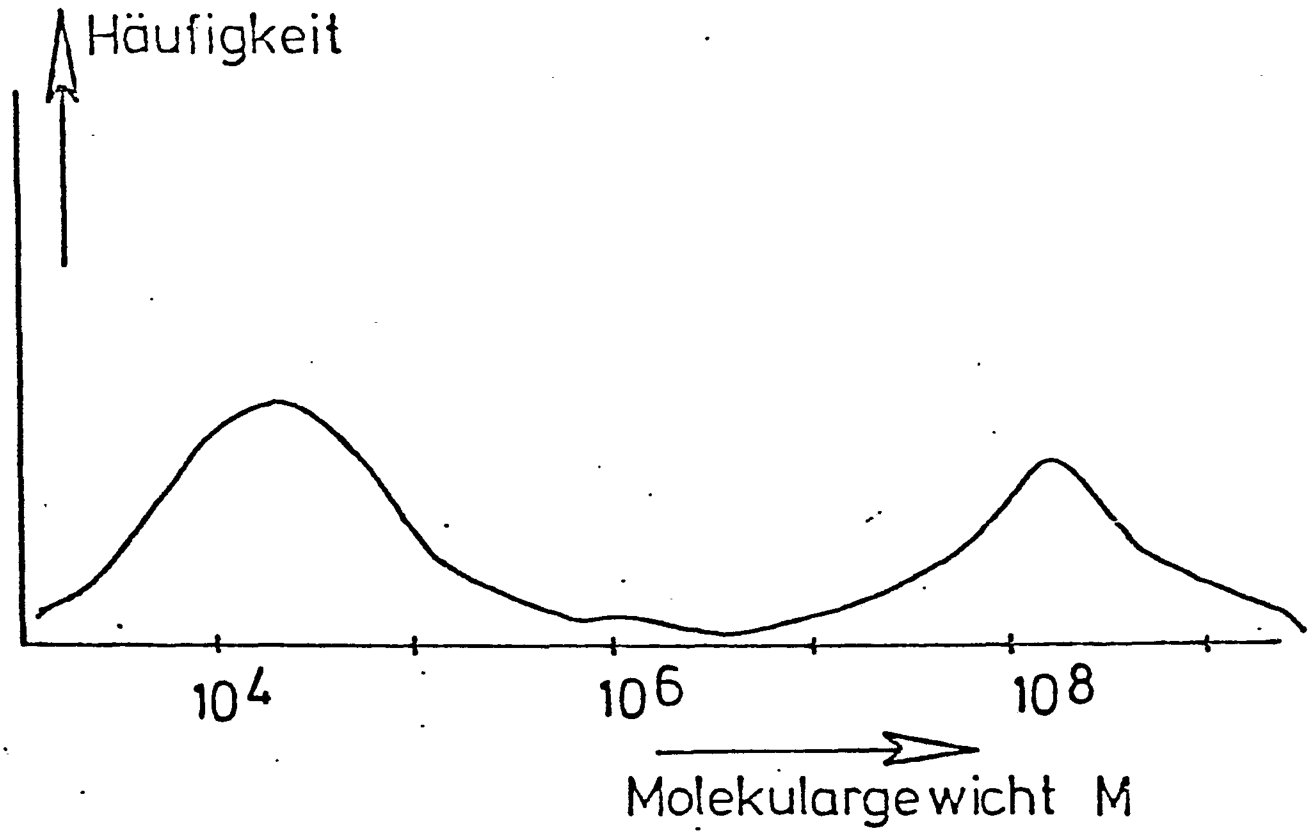
Häufigkeit
10^4
10^6
10^8
Molekulargewicht M

FIG. 4

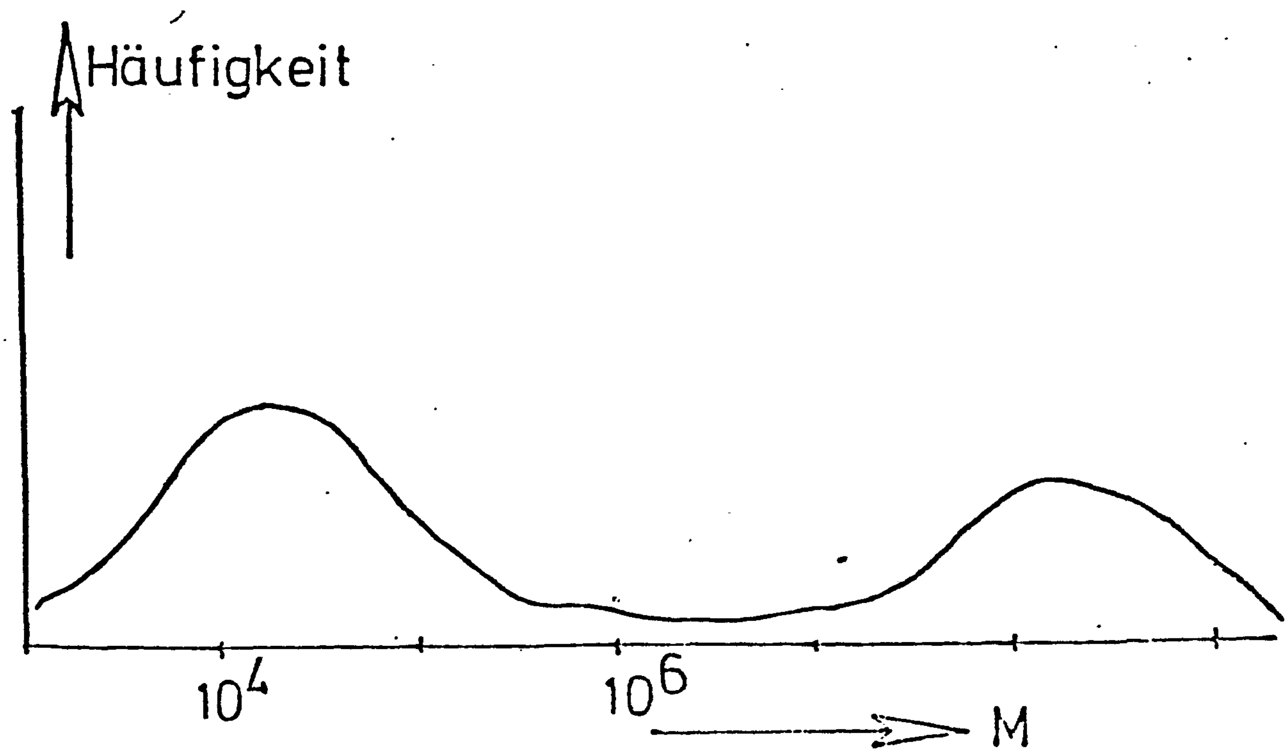
Häufigkeit
10^4
10^6
M

FIG. 5

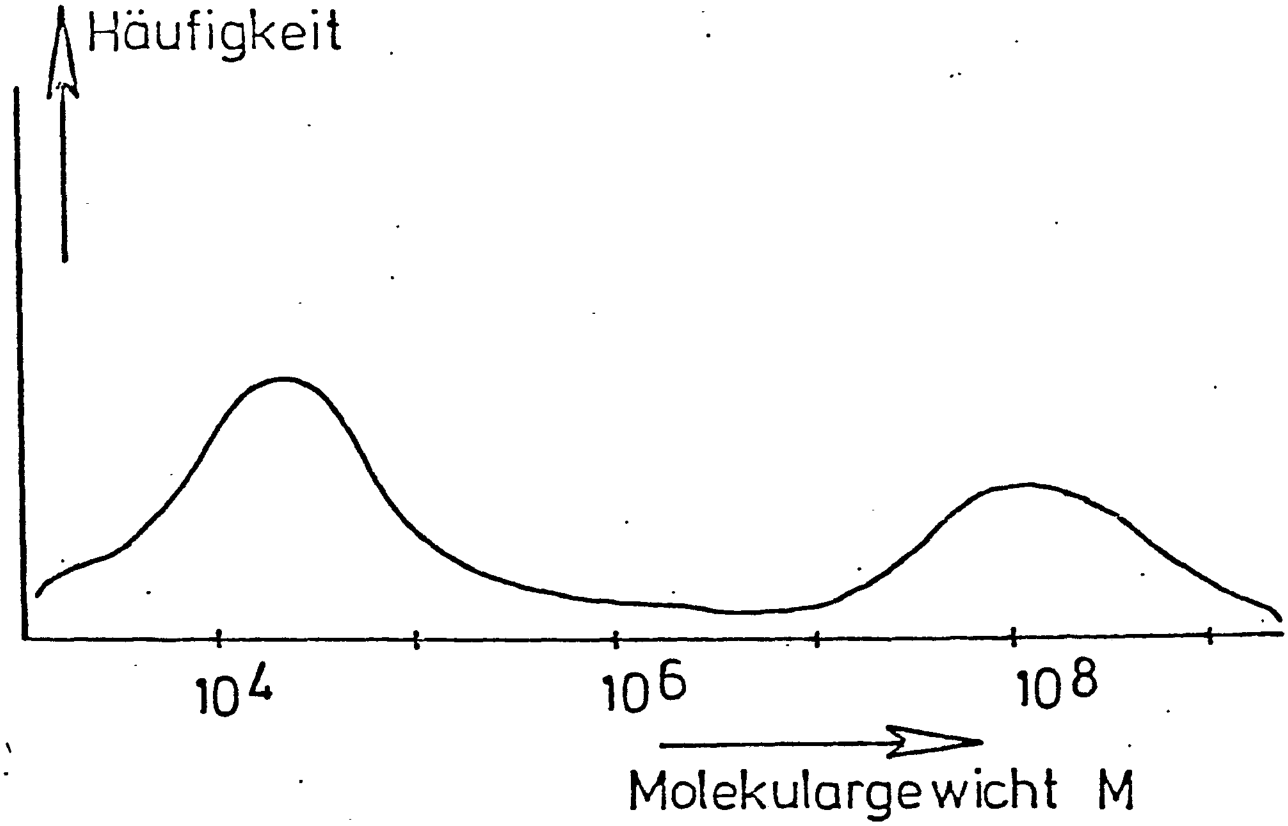
Häufigkeit
10^4
10^6
10^8
Molekulargewicht M

FIG. 6

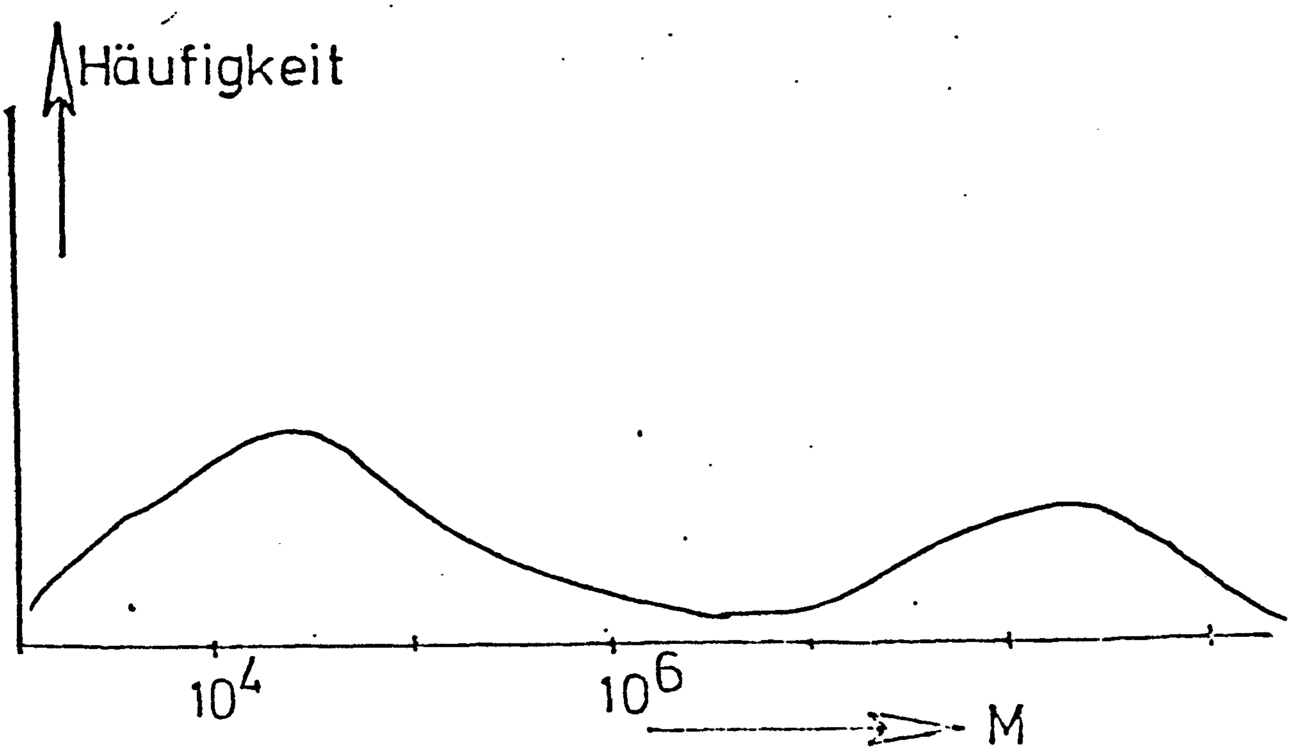
Häufigkeit
10^4
10^6
M

FIG. 7

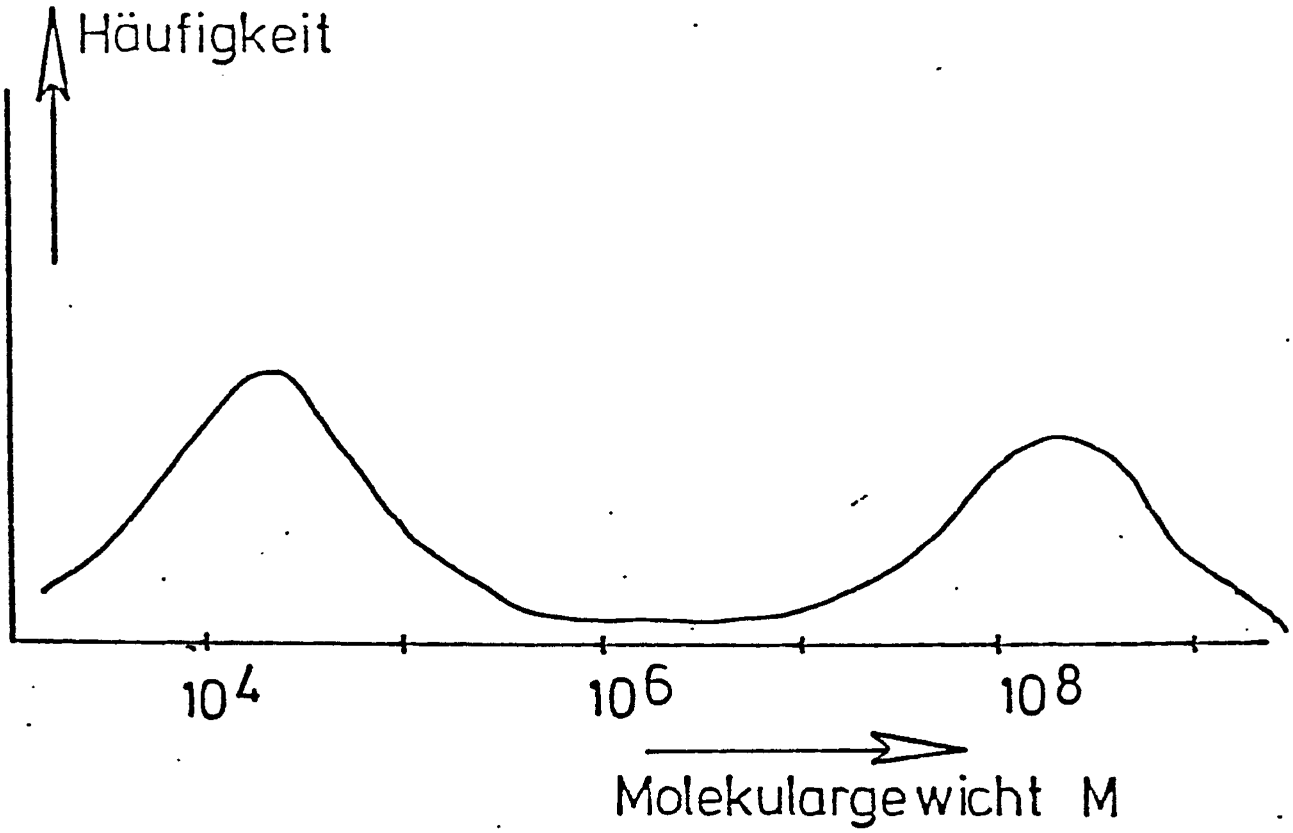
Häufigkeit
$10^4$
$10^6$
$10^8$
Molekulargewicht M

FIG. 8

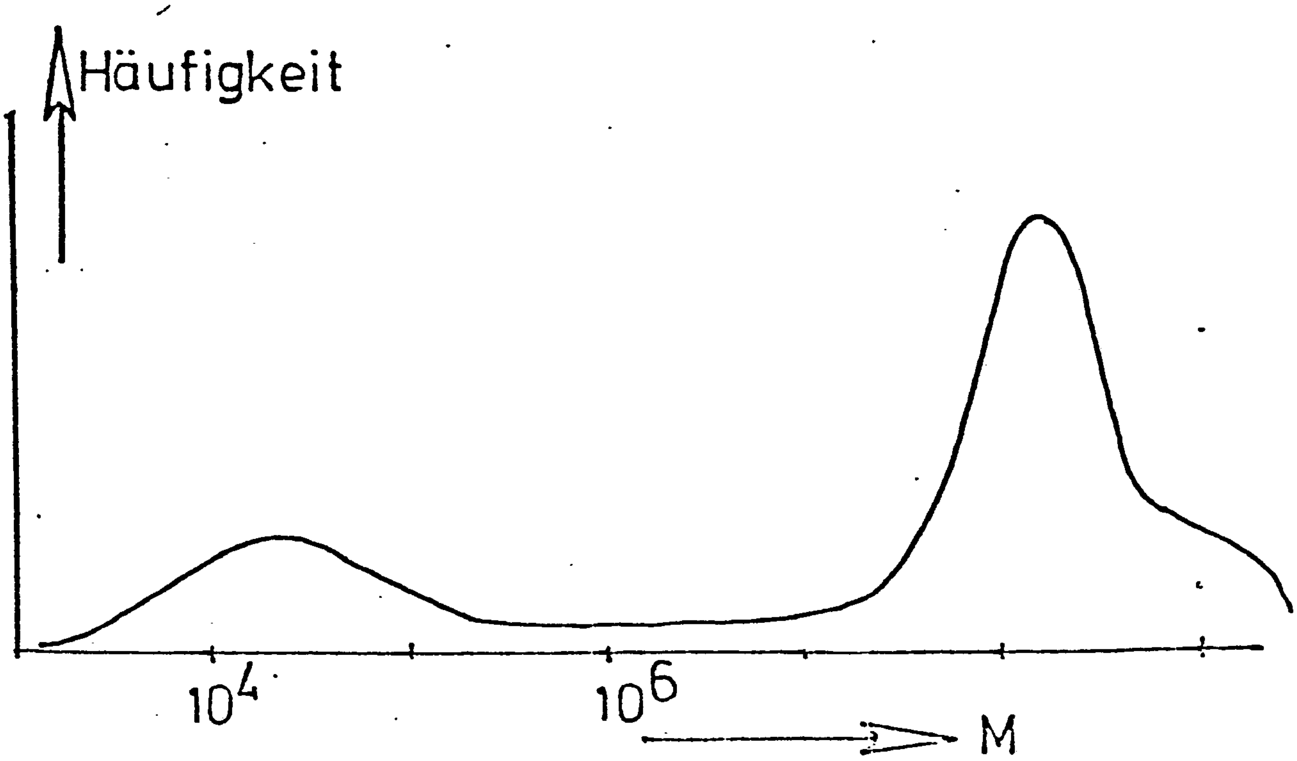
Häufigkeit
$10^4$
$10^6$
M

FIG. 9

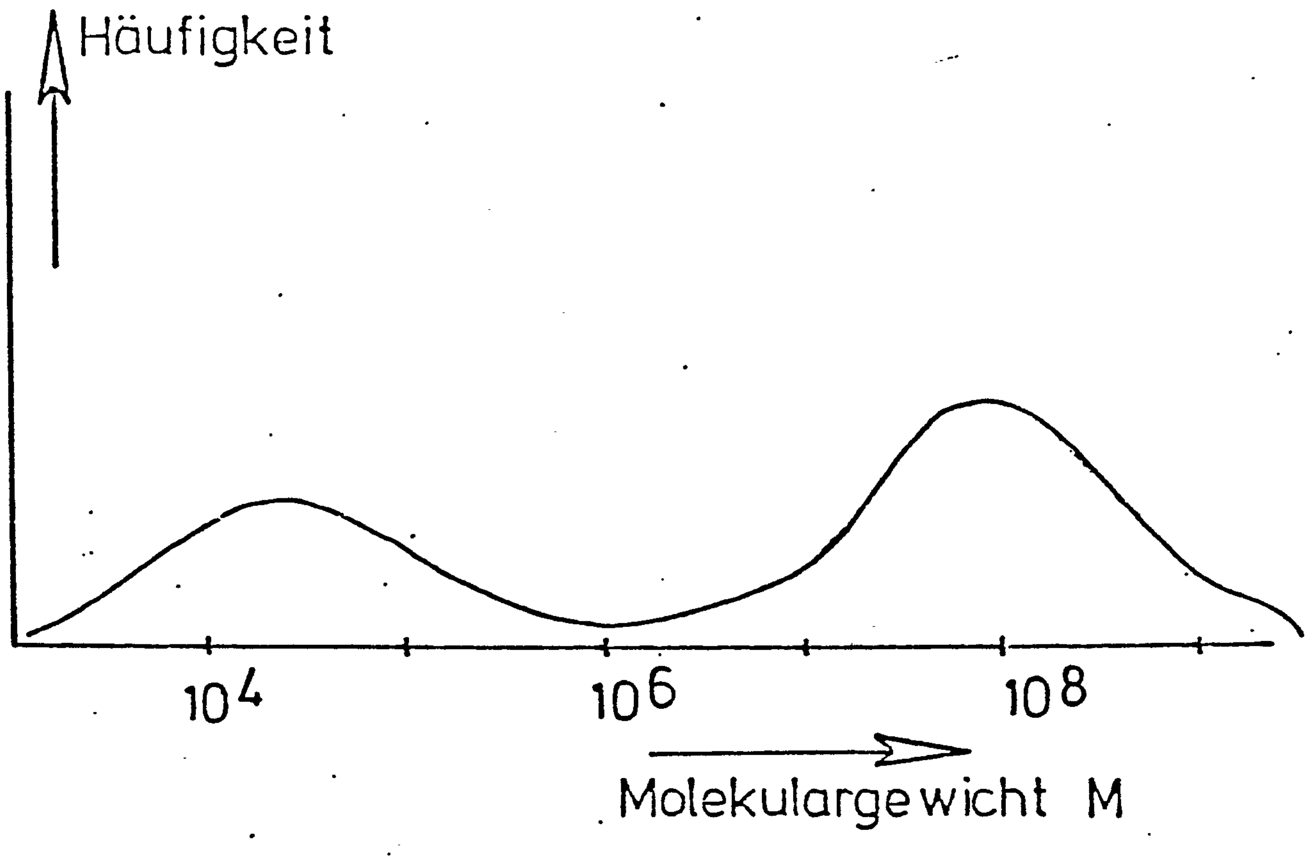
Häufigkeit
$10^4$
$10^6$
$10^8$
Molekulargewicht M

FIG. 10

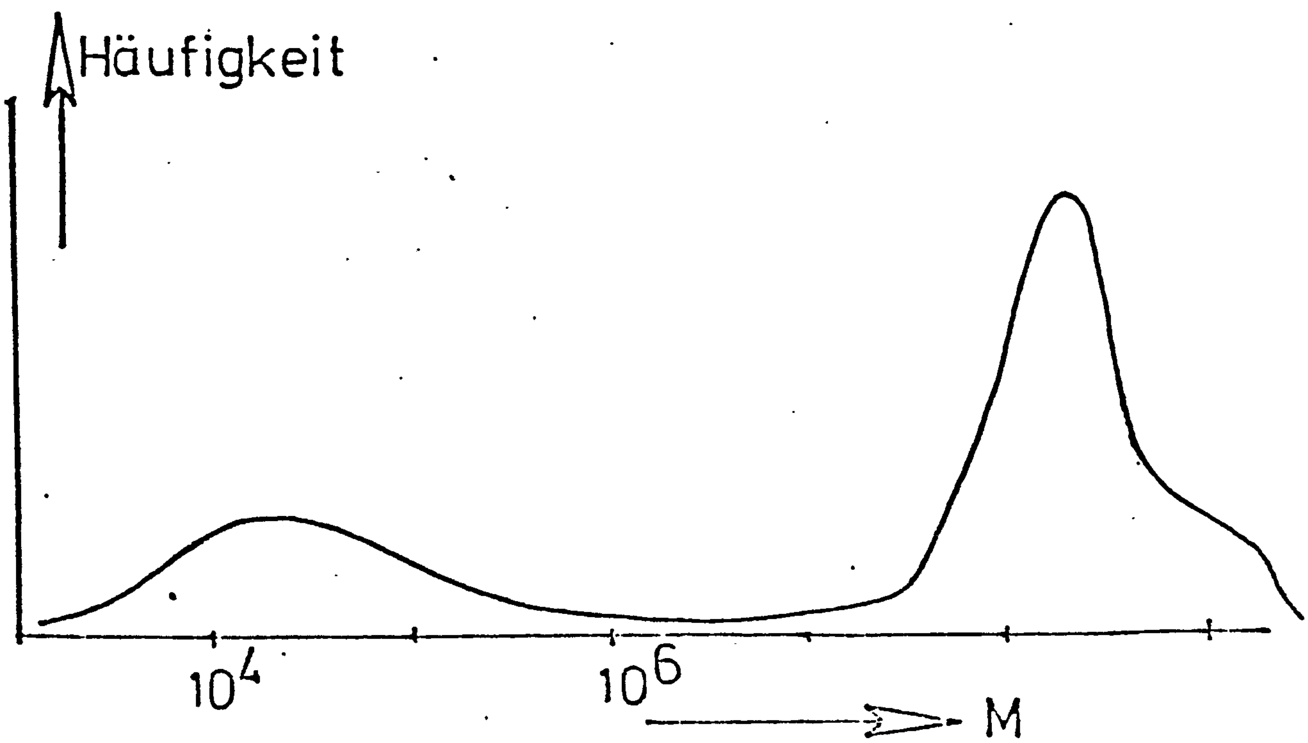
Häufigkeit
$10^4$
$10^6$
M

FIG. 11

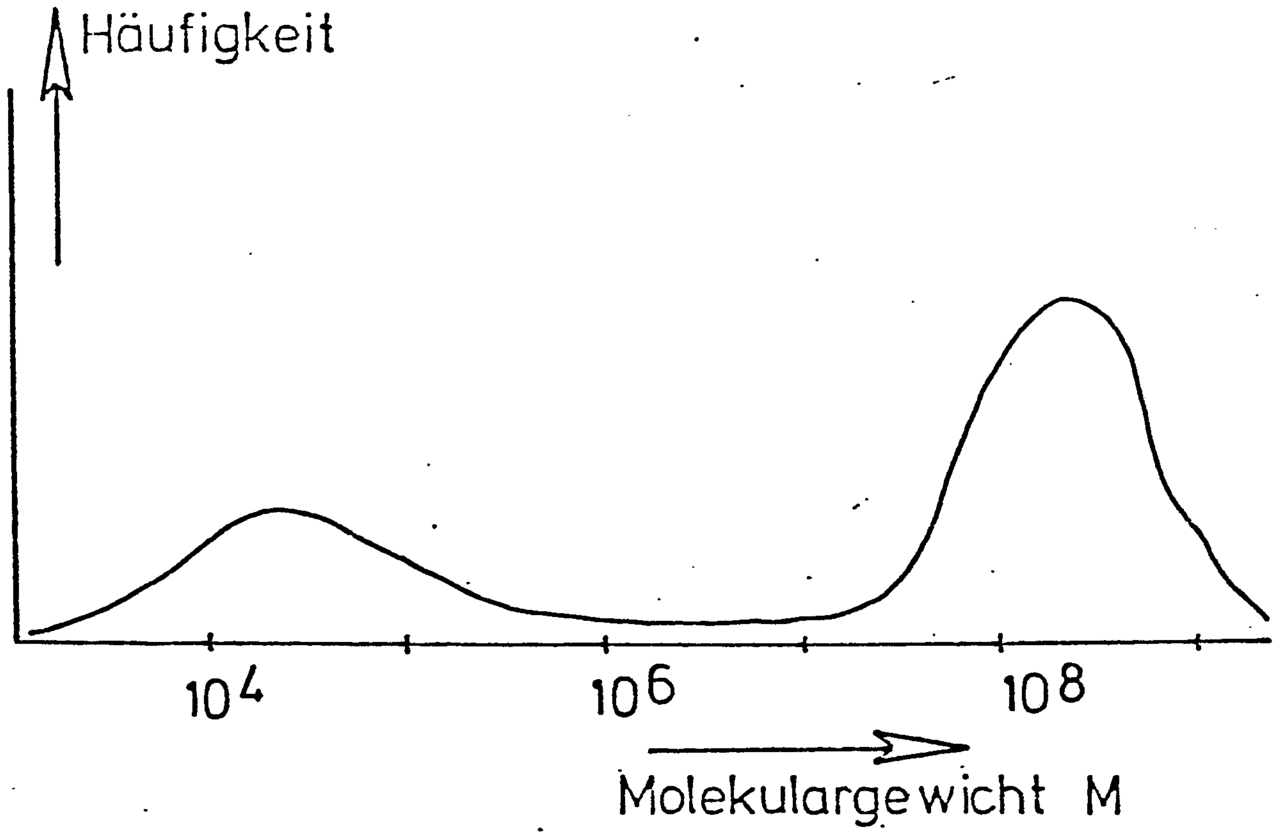
Häufigkeit
10^4
10^6
10^8
Molekulargewicht M

FIG. 12

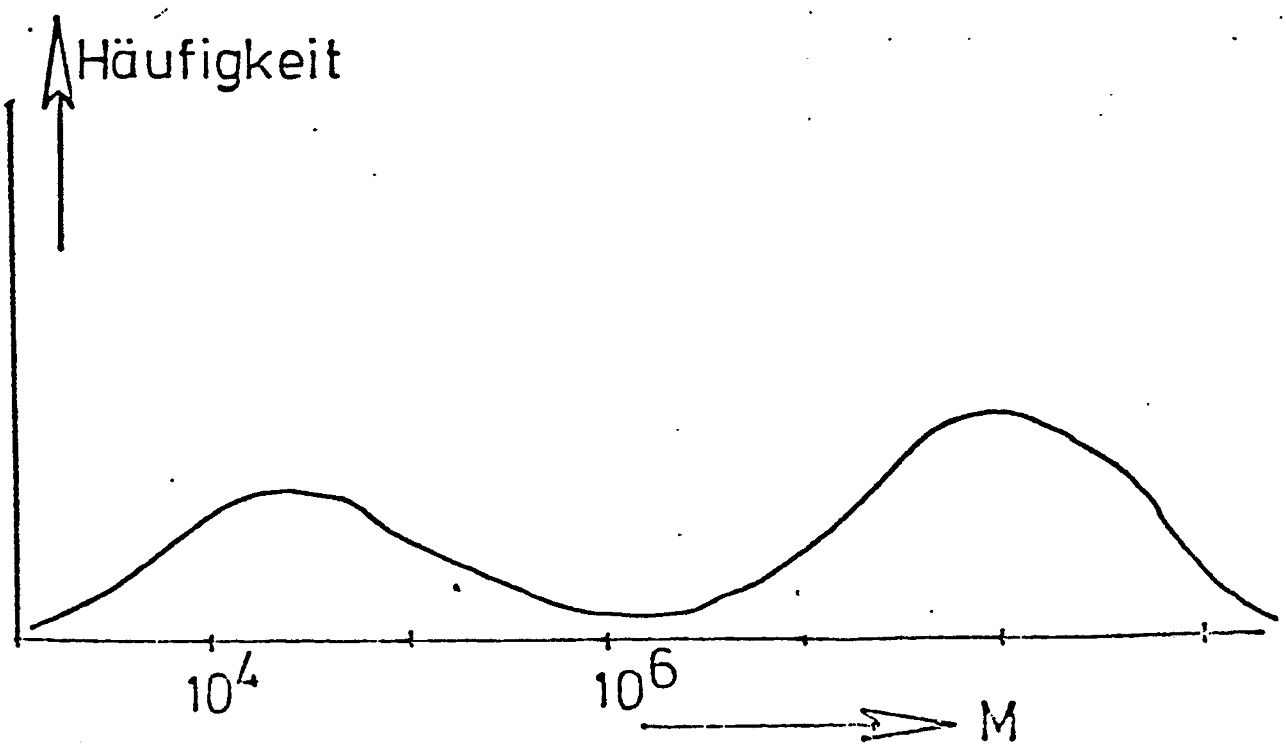
Häufigkeit
10^4
10^6
M

FIG. 13

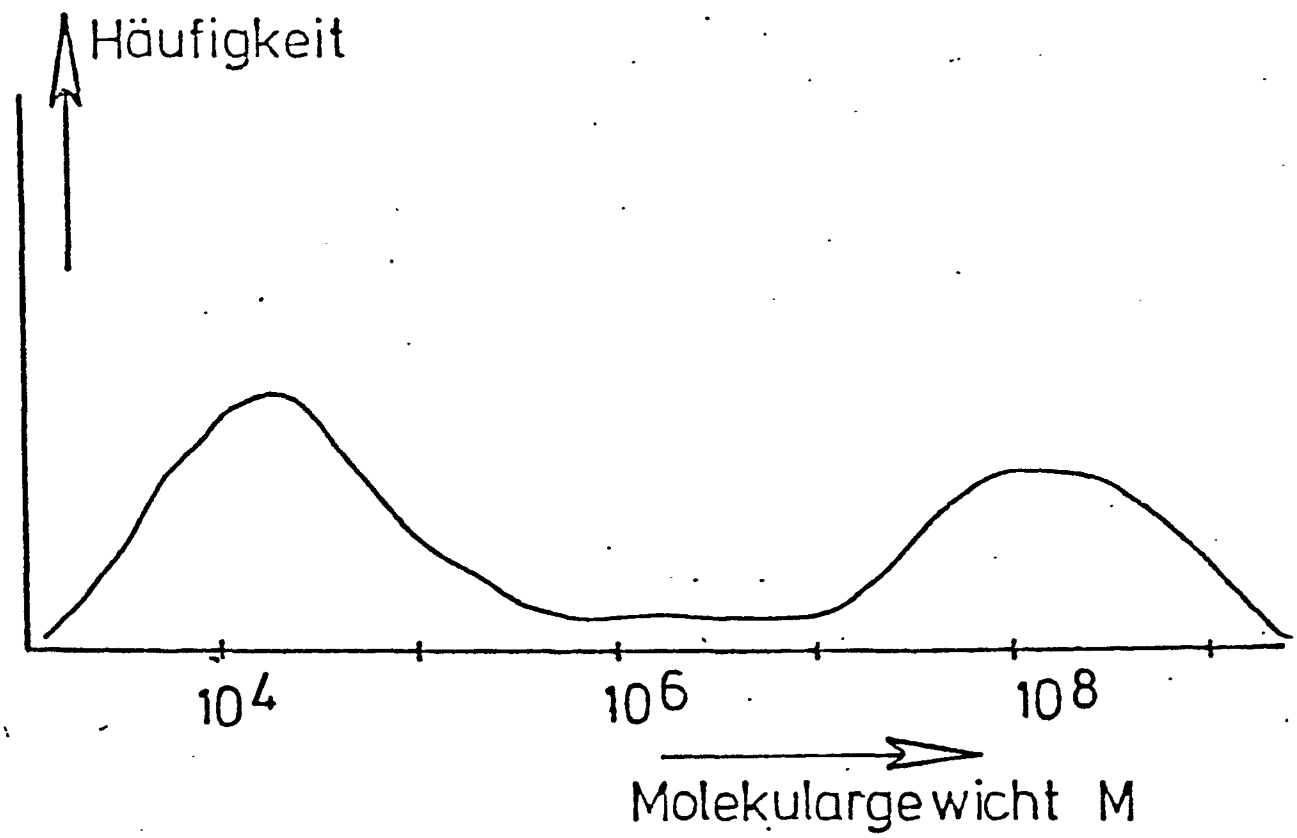
Häufigkeit
10^4
10^6
10^8
Molekulargewicht M

FIG. 14

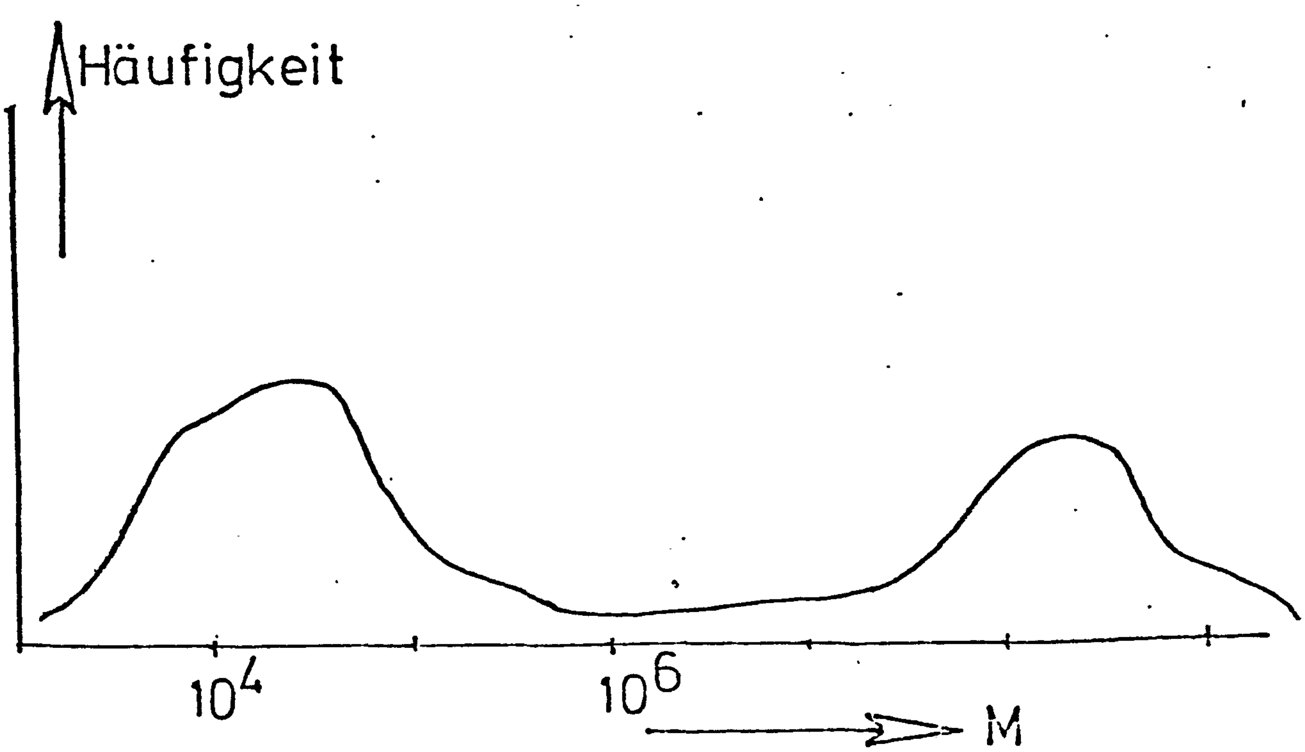
Häufigkeit
10^4
10^6
M

FIG.15

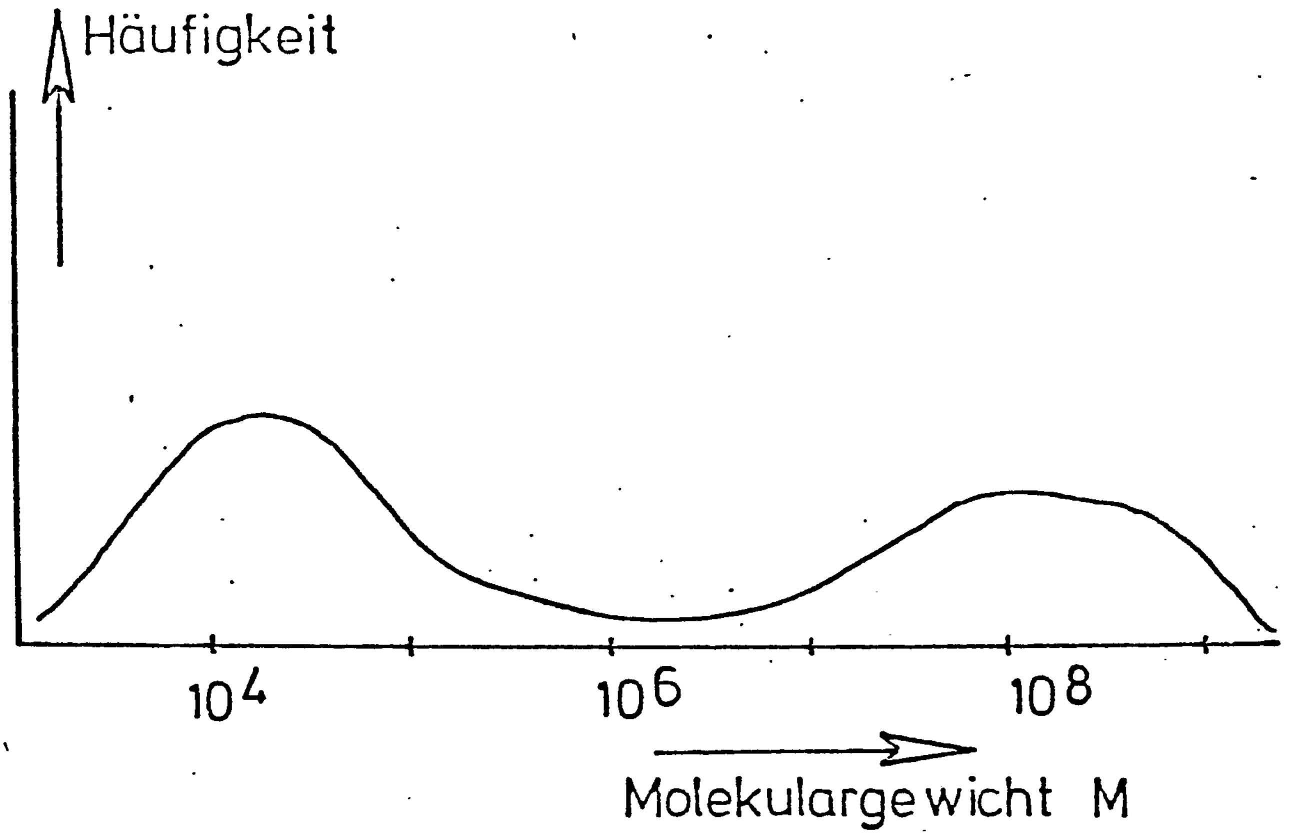
Häufigkeit
10^4
10^6
10^8
Molekulargewicht M

FIG. 16

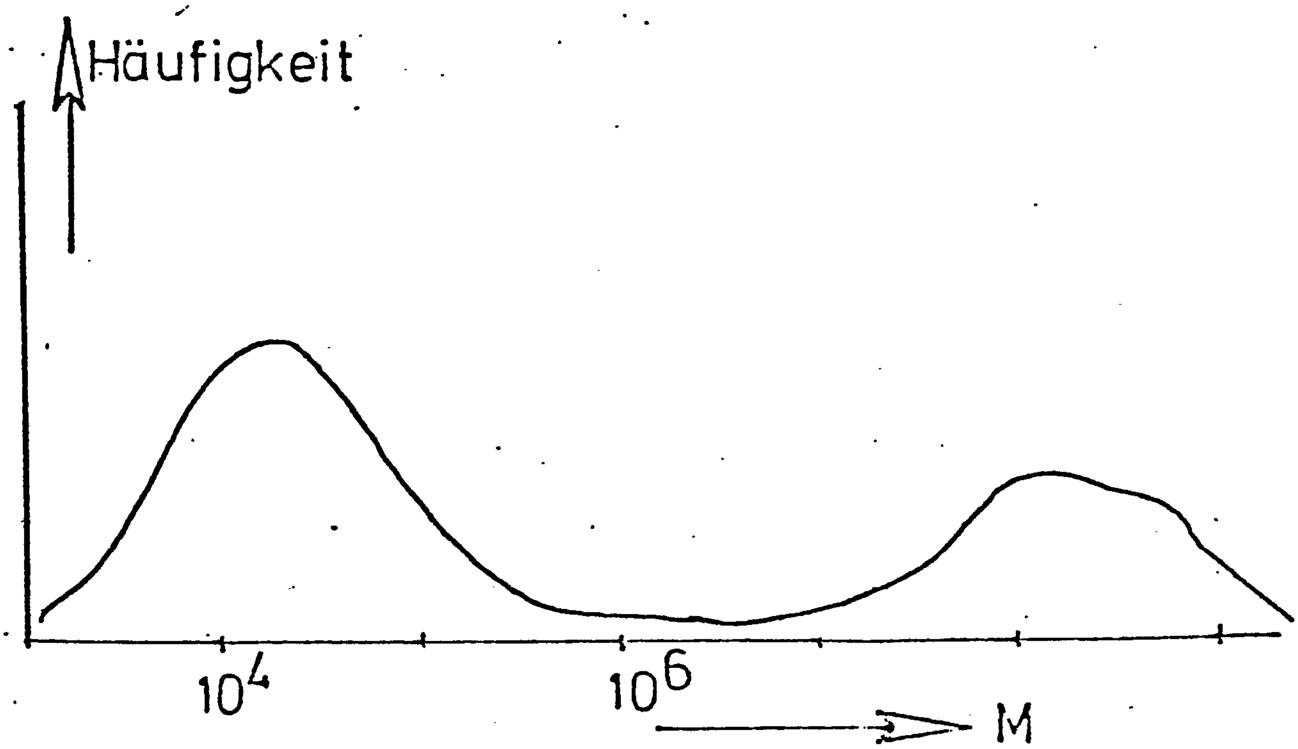
Häufigkeit
10^4
10^6
M

FIG.17

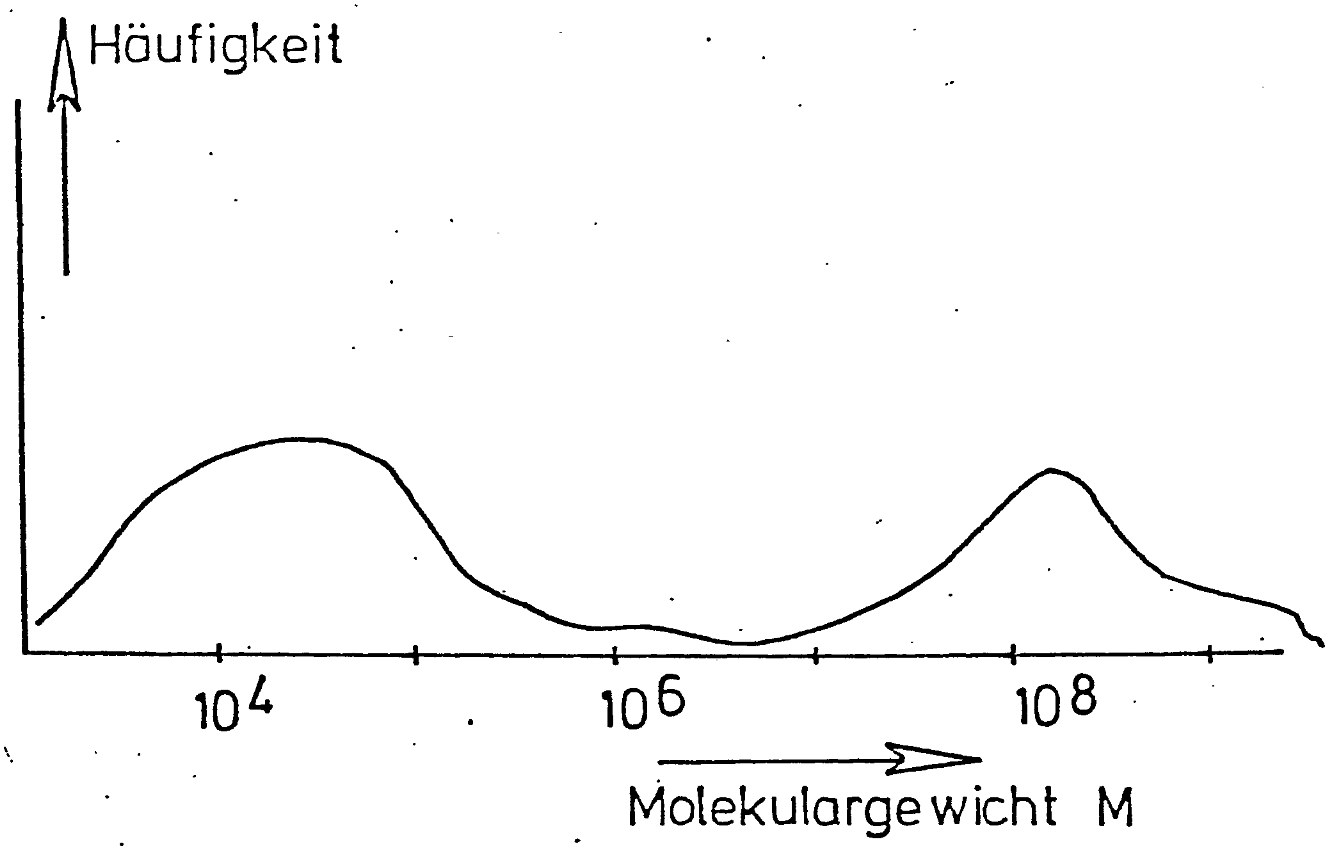
Häufigkeit
$10^4$
$10^6$
$10^8$
Molekulargewicht M

FIG. 18

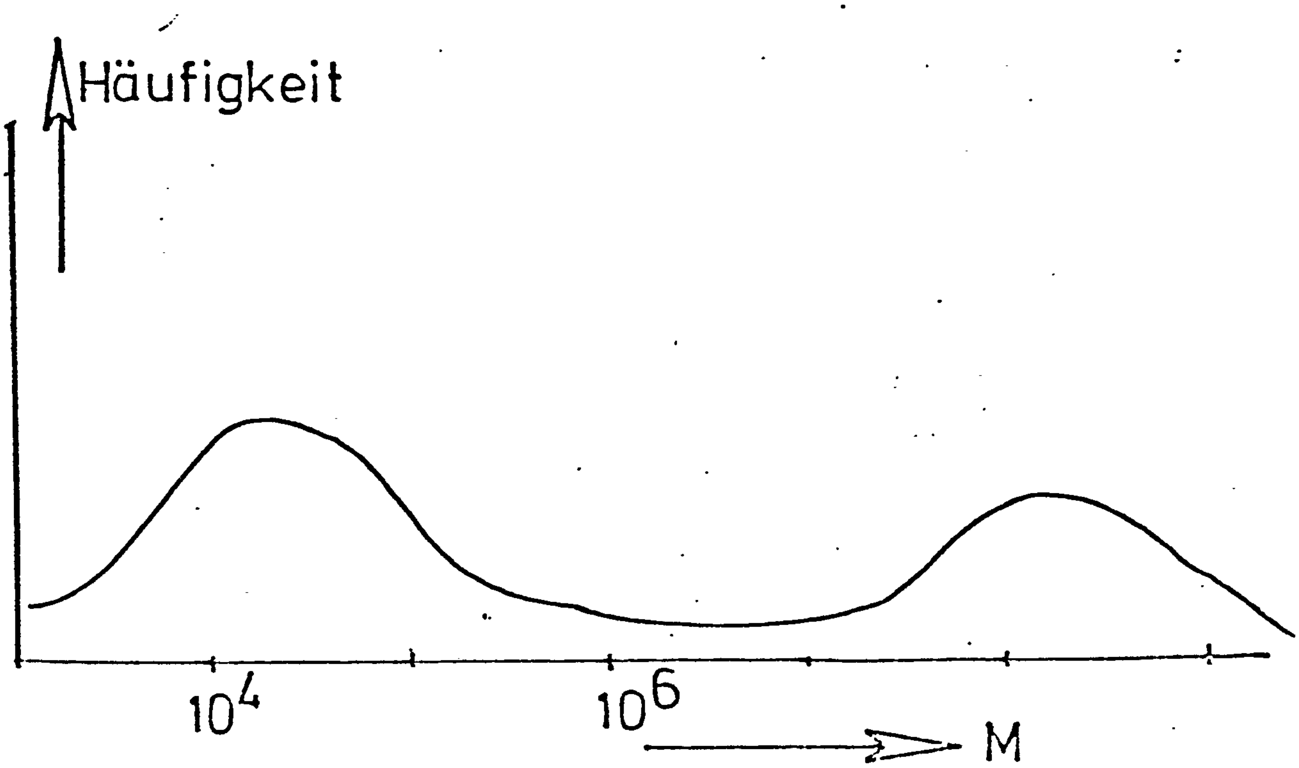
Häufigkeit
$10^4$
$10^6$
M

FIG. 19

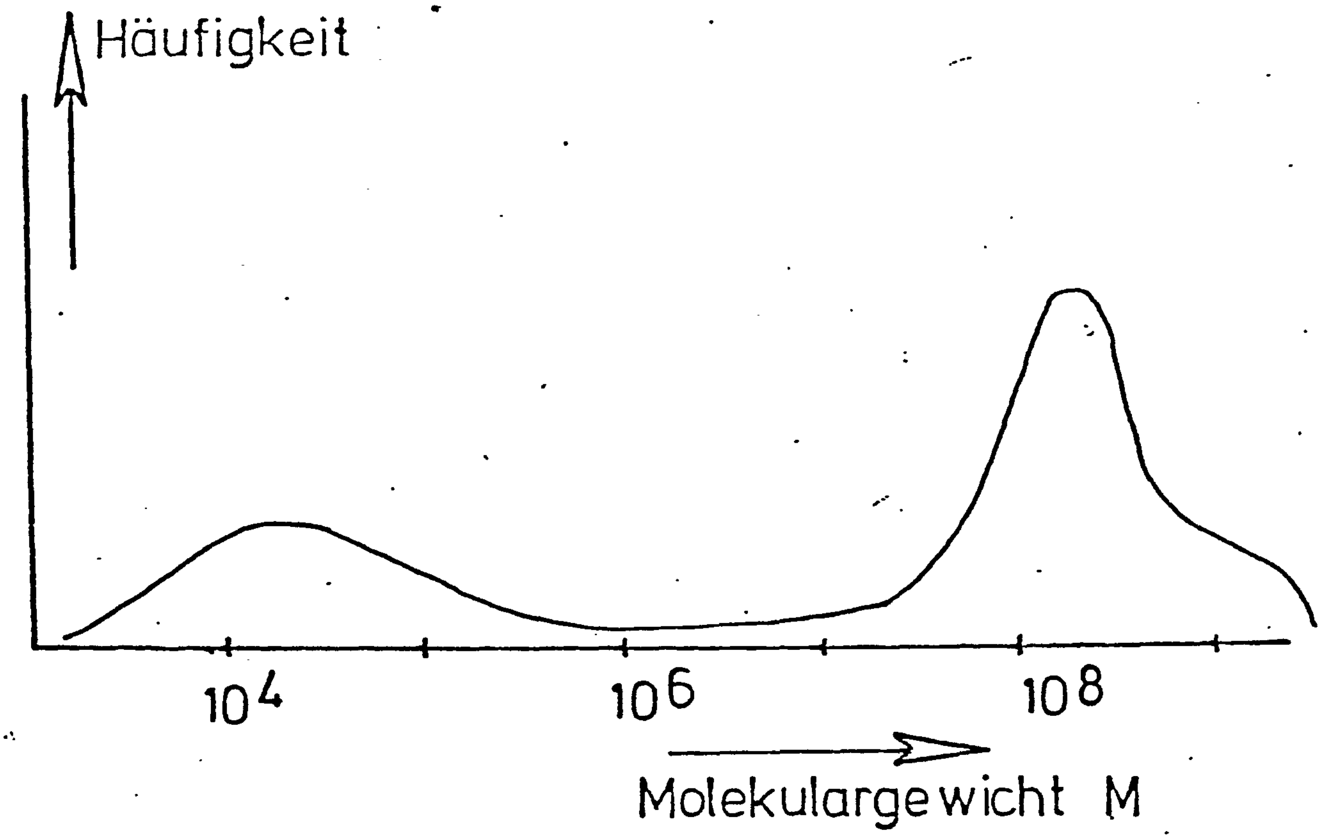
Häufigkeit
$10^4$
$10^6$
$10^8$
Molekulargewicht M

FIG. 20

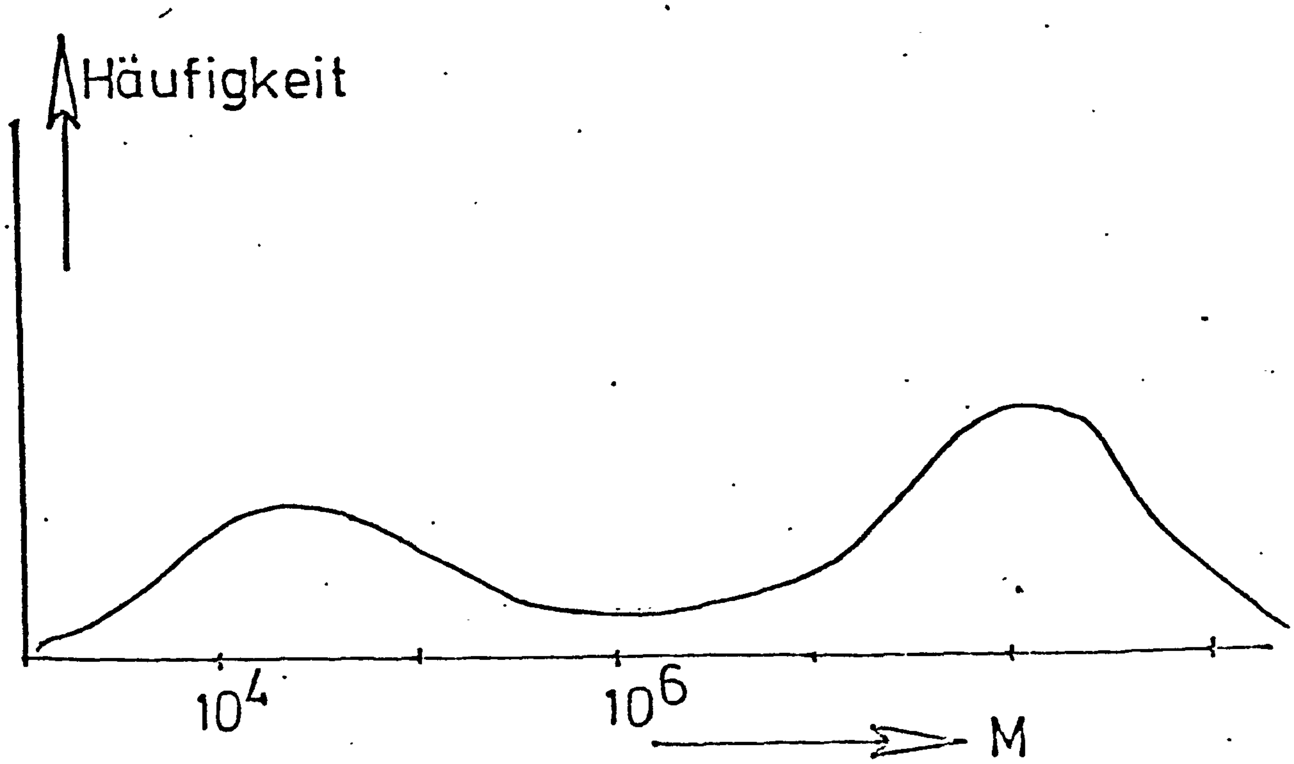
Häufigkeit
$10^4$
$10^6$
M

FIG. 21

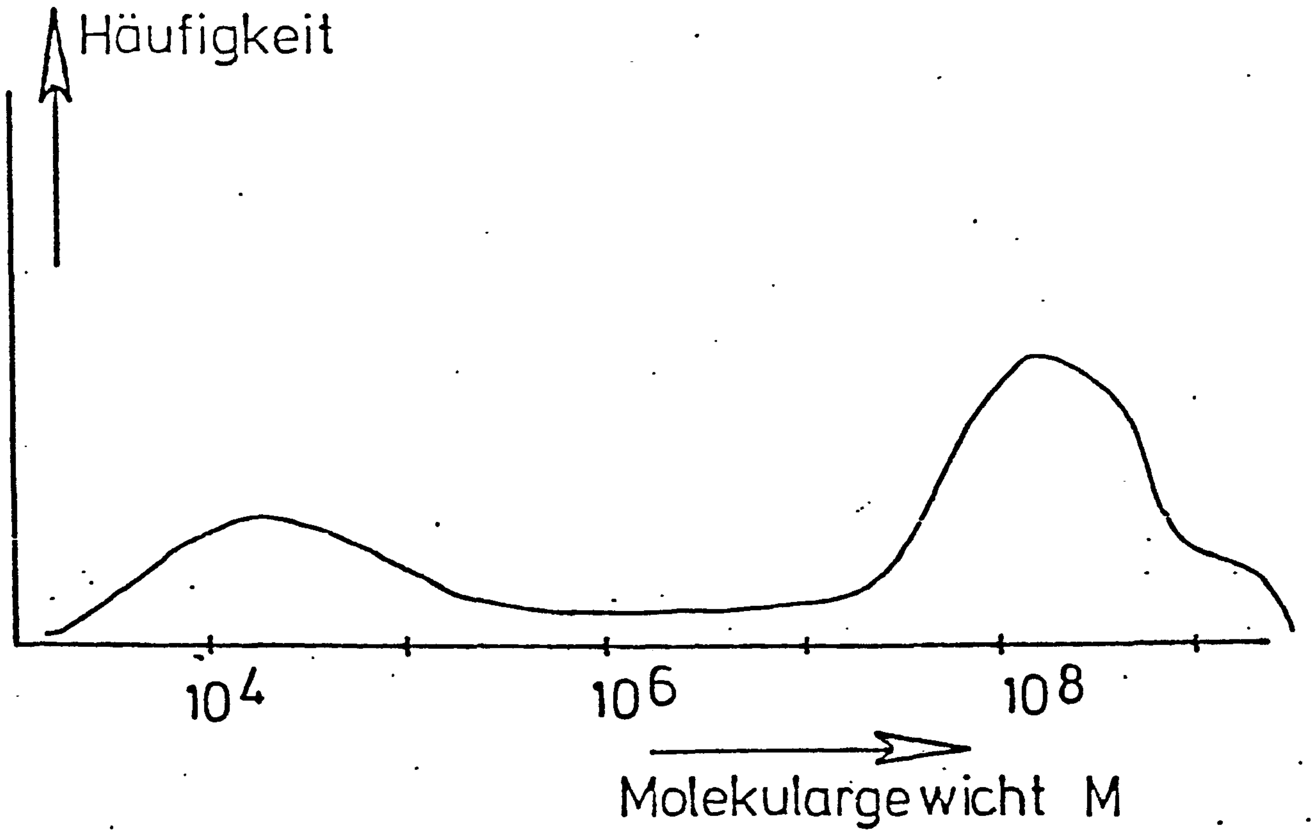
Häufigkeit
10^4
10^6
10^8
Molekulargewicht M

FIG. 22

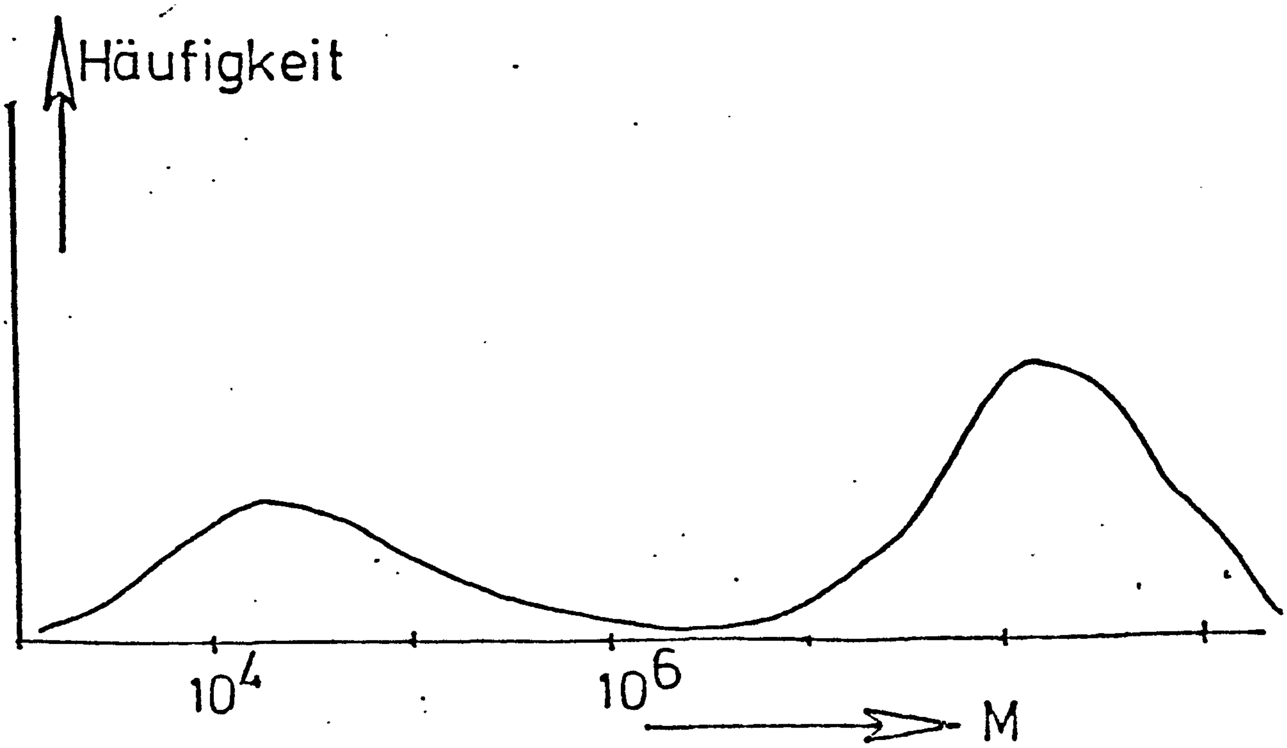
Häufigkeit
10^4
10^6
M

FIG. 23

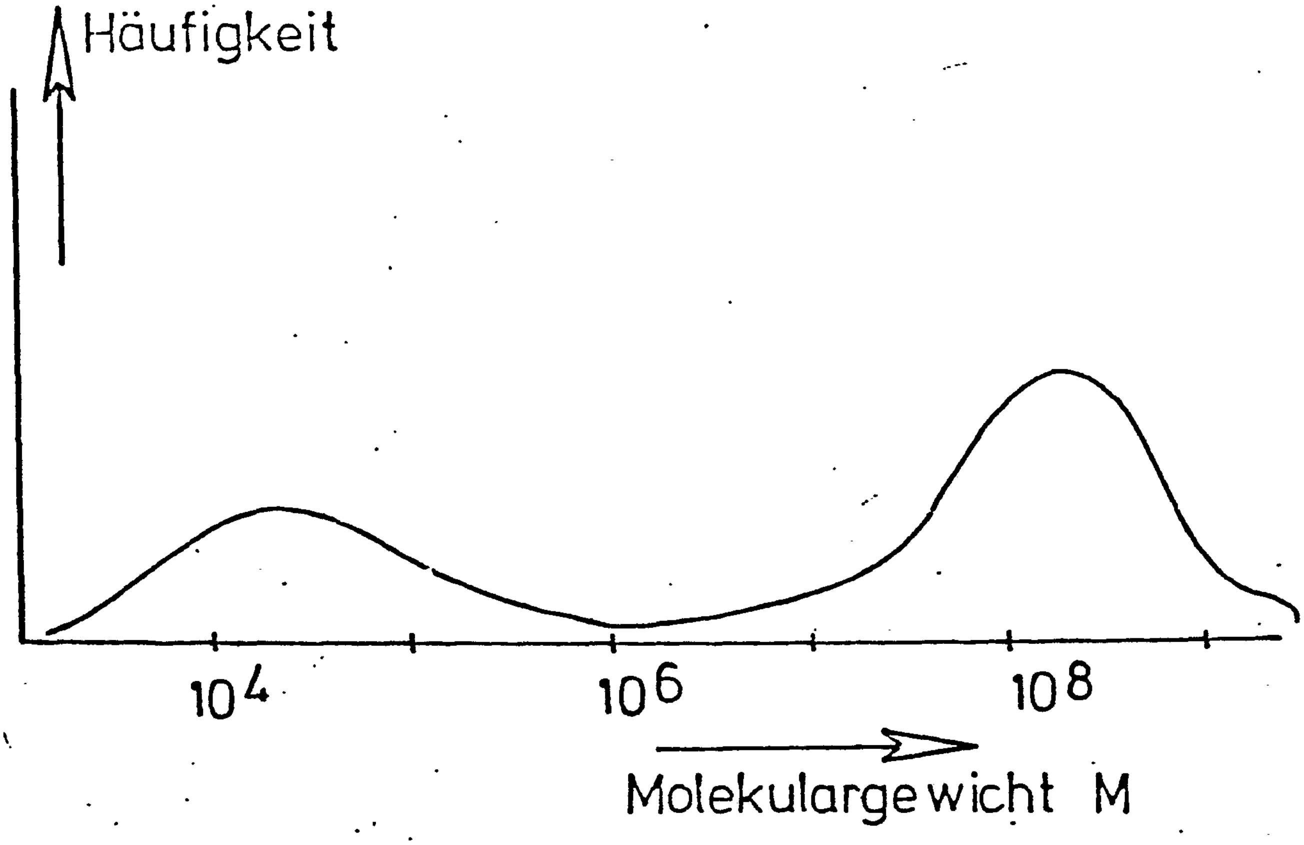
Häufigkeit
10^4
10^6
10^8
Molekulargewicht M

FIG. 24

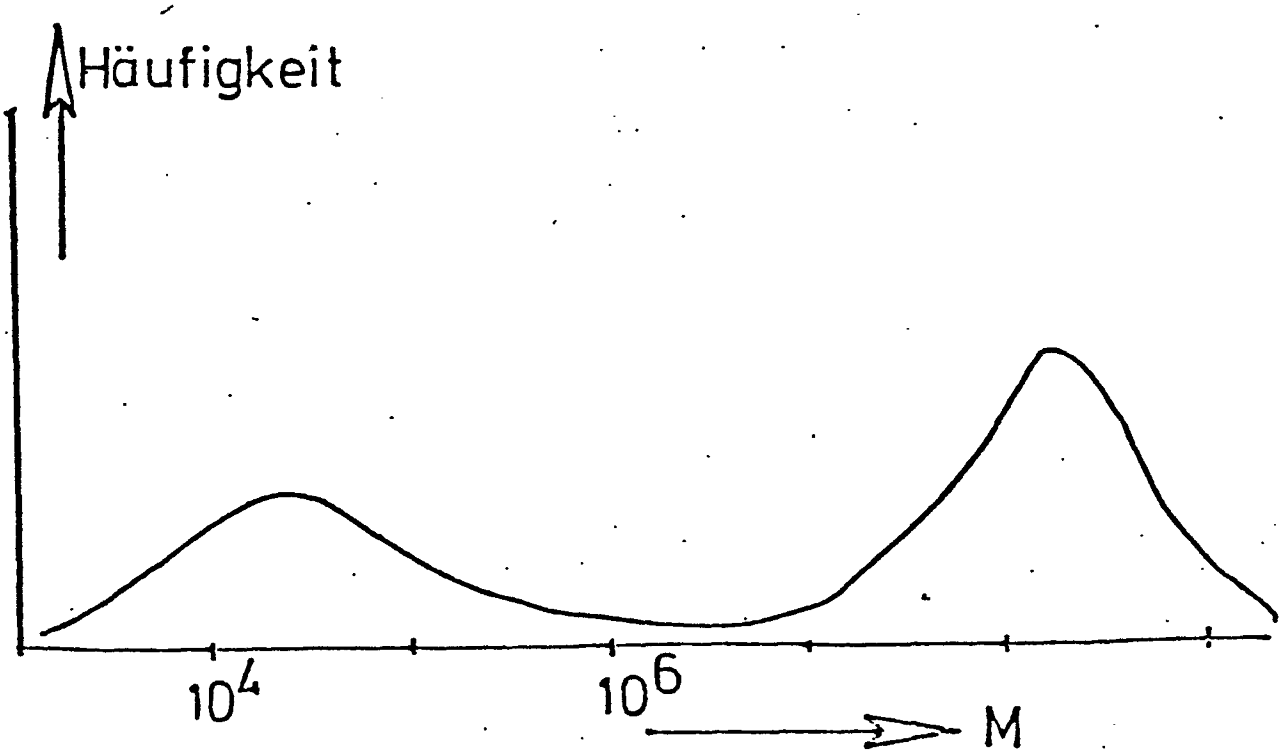
Häufigkeit
10^4
10^6
M